(19) **Europäisches Patentamt / European Patent Office / Office européen des brevets**

(11) **EP 4 582 773 A1**

(12) **EUROPEAN PATENT APPLICATION**
published in accordance with Art. 153(4) EPC

(43) Date of publication:
**09.07.2025 Bulletin 2025/28**

(21) Application number: **23860029.0**

(22) Date of filing: **15.08.2023**

(51) International Patent Classification (IPC):
**G01C 21/16** $^{(2006.01)}$     **G01C 19/38** $^{(2006.01)}$

(52) Cooperative Patent Classification (CPC):
**G01C 19/38; G01C 21/16**

(86) International application number:
**PCT/JP2023/029487**

(87) International publication number:
**WO 2024/048264 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.08.2022 JP 2022135982**

(71) Applicant: **Sony Group Corporation**
**Tokyo 108-0075 (JP)**

(72) Inventor: **KIMISHIMA Masato**
**Tokyo 108-0075 (JP)**

(74) Representative: **2SPL Patentanwälte PartG mbB**
**Landaubogen 3**
**81373 München (DE)**

(54) **INFORMATION PROCESSING DEVICE, INFORMATION PROCESSING METHOD, AND PROGRAM**

(57) The present disclosure relates to an information processing apparatus, an information processing method, and a program capable of estimating an azimuth of a mobile object that is moving by an inertial measurement unit (IMU) alone with high accuracy.

At least one of an acceleration and a velocity of a mobile object in a reference coordinate system is calculated on the basis of inertial navigation calculation, at least one of an acceleration and a velocity of the mobile object coordinate system that is a coordinate system of the mobile object is calculated from at least one of the acceleration and the velocity of the reference coordinate system, and a rotation component or an absolute azimuth is specified on the basis of at least one of the acceleration and the velocity of the mobile object coordinate system and reference information of at least one of an acceleration and a velocity serving as a non-holonomic constraint condition that constrains a degree of freedom of at least one of six axes related to an attitude and a velocity of the mobile object. The present disclosure can be applied to an inertial navigation system.

*FIG. 9*

**Description**

TECHNICAL FIELD

The present disclosure relates to an information processing apparatus, an information processing method, and a program, and more particularly, to an information processing apparatus, an information processing method, and a program capable of estimating an azimuth of a mobile object that is moving by an inertial measurement unit (IMU) alone with high accuracy.

BACKGROUND ART

As an azimuth estimation means of a mobile object, there is a gyro compass that estimates a north direction using an inertial measurement unit (IMU). Unlike the geomagnetic compass, it is advantageous that it does not depend on environmental magnetism or the like, but an error is large during movement, and stationary measurement for a long time (about 100 sec) is required.
Therefore, a technique of estimating true north regardless of whether or not a user is moving by analyzing global positioning system (GPS) data and IMU data together has been proposed (see Patent Document 1).
Furthermore, a technique of estimating a north direction by an estimation algorithm using an input of an IMU as a movement component has been proposed (see Patent Document 2).

CITATION LIST

PATENT DOCUMENT

Patent Document 1: Japanese Patent Application Laid-Open No. 2014-141846
Patent Document 2: Japanese Patent Application Laid-Open No. 2019-196976

SUMMARY OF THE INVENTION

PROBLEMS TO BE SOLVED BY THE INVENTION

However, in the technique of Patent Document 1, an expensive external attitude sensor such as a large GPS is a required configuration for measurement in the north direction during movement, and in a case where the GPS is not used, it is necessary to use a speed sensor together with an expensive and large external device. For this reason, for example, the applicable form factor is limited.
Furthermore, in the technique of Patent Document 2, the north direction is estimated by the IMU alone, but since the estimation is performed on the basis of the probability theory, there is a limit in accuracy.
The present disclosure has been made in view of such a situation, and particularly, an object of the present disclosure is to enable an inertial measurement unit (IMU) alone to estimate an azimuth of a mobile object that is moving with high accuracy.

SOLUTIONS TO PROBLEMS

An information processing apparatus and a program according to one aspect of the present disclosure are an information processing apparatus and a program including: a reference coordinate system calculation unit that calculates at least one of an acceleration and a velocity of a mobile object in a reference coordinate system on the basis of inertial navigation calculation; a mobile object coordinate system calculation unit that calculates at least one of an acceleration and a velocity of a mobile object coordinate system that is a coordinate system of the mobile object from at least one of the acceleration and the velocity of the reference coordinate system; and a specification unit that specifies a rotation component or an absolute azimuth on the basis of at least one of the acceleration and the velocity of the mobile object coordinate system and reference information of at least one of an acceleration and a velocity serving as a non-holonomic constraint condition that constrains a degree of freedom of at least one of six axes related to an attitude and a velocity of the mobile object.
An information processing method according to one aspect of the present disclosure is an information processing method including the steps of: calculating at least one of an acceleration and a velocity of a mobile object in a reference coordinate system on the basis of inertial navigation calculation; calculating at least one of an acceleration and a velocity of a mobile object coordinate system that is a coordinate system of the mobile object from at least one of the acceleration and the velocity of the reference coordinate system; and specifying a rotation component or an absolute azimuth on the basis of at least one of the acceleration and the velocity of the mobile object coordinate system and reference information of at least one of an acceleration and a velocity serving as a non-holonomic constraint condition that constrains a degree of freedom of at least one of six axes related to an attitude and a velocity of the mobile object.

In one aspect of the present disclosure, at least one of an acceleration and a velocity of a mobile object in a reference coordinate system is calculated on the basis of inertial navigation calculation; at least one of an acceleration and a velocity of a mobile object coordinate system that is a coordinate system of the mobile object is calculated from at least one of the acceleration and the velocity of the reference coordinate system; and a rotation component or an absolute azimuth is specified on the basis of at least one of the acceleration and the velocity of the mobile object coordinate system and reference information of at least one of an acceleration and a velocity serving as a non-holonomic constraint condition that constrains a degree of freedom of at least one of six axes related to an attitude and a velocity of the mobile object.

BRIEF DESCRIPTION OF DRAWINGS

Fig. 1 is a diagram illustrating an operation principle of an IMU.
Fig. 2 is a diagram for explaining changes in observation values in a reference coordinate system (global coordinate system) and a sensor coordinate system when an attitude of a mobile object changes.
Fig. 3 is a diagram for explaining changes in observation values in the reference coordinate system (global coordinate system) and the sensor coordinate system when an attitude of the mobile object changes.
Fig. 4 is a diagram for explaining an error due to a rotation component.
Fig. 5 is a diagram for explaining error diffusion caused by an inappropriate initial azimuth.
Fig. 6 is a diagram for explaining that an acceleration error after rotation compensation depends on an initial azimuth.
Fig. 7 is a diagram for explaining that an appropriate initial azimuth is specified by searching for an initial azimuth at which a velocity of a mobile object moving by drive wheels in a lateral direction becomes 0.
Fig. 8 is a diagram for explaining a configuration example of a mobile object of the present disclosure.
Fig. 9 is a diagram for explaining a configuration example of an information processing apparatus mounted on the mobile object in Fig. 8.
Fig. 10 is a diagram for explaining a configuration example of an inertial measurement unit in Fig. 9.
Fig. 11 is a flowchart for explaining an azimuth specification process.
Fig. 12 is a flowchart for explaining an initial state measurement process.
Fig. 13 is a flowchart for explaining a rotation compensation process.
Fig. 14 is a flowchart for explaining an inertial navigation calculation process.
Fig. 15 is a flowchart for explaining an optimal initial azimuth selection process.
Fig. 16 is a diagram for explaining a method of obtaining a lateral velocity of a mobile object moved by drive wheels.
Fig. 17 is a diagram for explaining a method of specifying an initial direction by variation according to setting of an initial direction of a lateral velocity.
Fig. 18 is a diagram for explaining that variation according to setting of an initial direction of a lateral velocity increases with the lapse of time.
Fig. 19 is a flowchart for explaining a modification of the optimal initial azimuth selection process.
Fig. 20 illustrates a configuration example of a general-purpose computer.

MODE FOR CARRYING OUT THE INVENTION

Hereinafter, a preferred embodiment of the present disclosure will be described in detail with reference to the accompanying drawings. Note that, in the present specification and drawings, configuration elements having substantially the same functional configuration are denoted by the same reference signs, and redundant description is omitted.

Hereinafter, modes for carrying out the present technology will be described. The description will be given in the following order.

1. Outline of present disclosure
2. Preferred embodiment
3. Modification example
4. Example of execution by software

<<1. Outline of present disclosure>>

<Operation principle of INS>

In particular, the present disclosure enables an inertial measurement unit (IMU) alone to estimate an azimuth of a mobile object that is moving with high accuracy.

In describing the technology of the present disclosure, first, an operation principle of an inertial navigation system (INS) using the IMU will be described.

The inertial navigation system is mounted on various mobile objects such as an aircraft and a drone, and detects an attitude, a velocity, and a position of the mobile object in a three-dimensional space.

Note that the three-dimensional space here is, for example, a space in which a position in the space can be expressed by coordinates on each of an x axis, a y axis, and a z axis. Hereinafter, the three-dimensional space is also referred to as an xyz space including three axes of the x axis, the y axis, and the z axis.

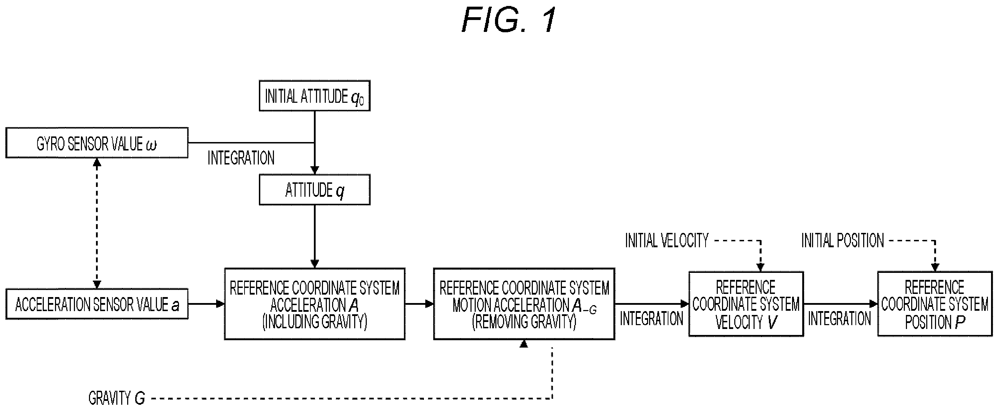

The IMU is provided with a gyro sensor that detects angular velocities of three axes in a three-dimensional space and an acceleration sensor that detects accelerations of the three axes, and as illustrated in Fig. 1, a gyro sensor value $\omega$ including an angular velocity of a sensor coordinate system and an acceleration sensor value a including an acceleration are obtained by the gyro sensor value $\omega$ and the acceleration sensor value a, respectively.

The INS calculates the attitude, velocity, and position of the reference coordinate system (global coordinate system) using the gyro sensor value $\omega$ and the acceleration sensor value a of the sensor coordinate system.

More specifically, in the INS, an attitude q is obtained by time-integrating the gyro sensor value $\omega$ of the sensor coordinate system. At this time, the attitude q is set to the attitude q of the reference coordinate system (global coordinate system) by using the initial attitude q0 as an initial value. The attitude q is sequentially updated by repeatedly integrating the gyro sensor value $\omega$.

The initial attitude q0 is obtained by obtaining the roll and pitch directions from the gravitational acceleration, and the initial value is set to 0 or is set on the basis of information acquired from another sensor such as a global positioning system (GPS) sensor, for example, in the yaw direction.

The acceleration sensor value a in the sensor coordinate system is converted into the acceleration A in the reference coordinate system on the basis of the attitude q in the reference coordinate system.

Furthermore, an acceleration $A_{-G}$ from which the gravity G in the reference coordinate system has been removed is obtained by removing the gravity from the acceleration A in the reference coordinate system.

Moreover, the acceleration $A_{-G}$ from which the gravitational acceleration in the reference coordinate system has been removed is integrated, and an initial velocity as an initial value is input, whereby the velocity V in the reference coordinate system is obtained.

Furthermore, the velocity V in the reference coordinate system is integrated, and an initial position serving as an initial value is input, whereby the position P in the reference coordinate system is obtained.

In this manner, the angular velocity sensor value $\omega$ and the acceleration sensor value a in the sensor coordinate system are integrated, and the attitude q, the velocity V, and the position P in the reference coordinate system are continuously obtained.

Here, since the angular velocity sensor value $\omega$ is detected in a state in which the rotation component is included as the angular velocity error, if the angular velocity sensor value $\omega$ is used as it is, the angular velocity error caused by the rotation component affects all of the attitude q, the accelerations A and $A_{-G}$, and the position P, and error diffusion occurs with the lapse of time. Therefore, it is important to appropriately set the initial attitude q0 in order to improve the accuracy of the inertial navigation system.

<Change in observation values of reference coordinate system and sensor coordinate system when attitude of mobile object changes>

Next, changes in observation values in the reference coordinate system (global coordinate system) and the sensor coordinate system when the attitude of the mobile object changes will be described.

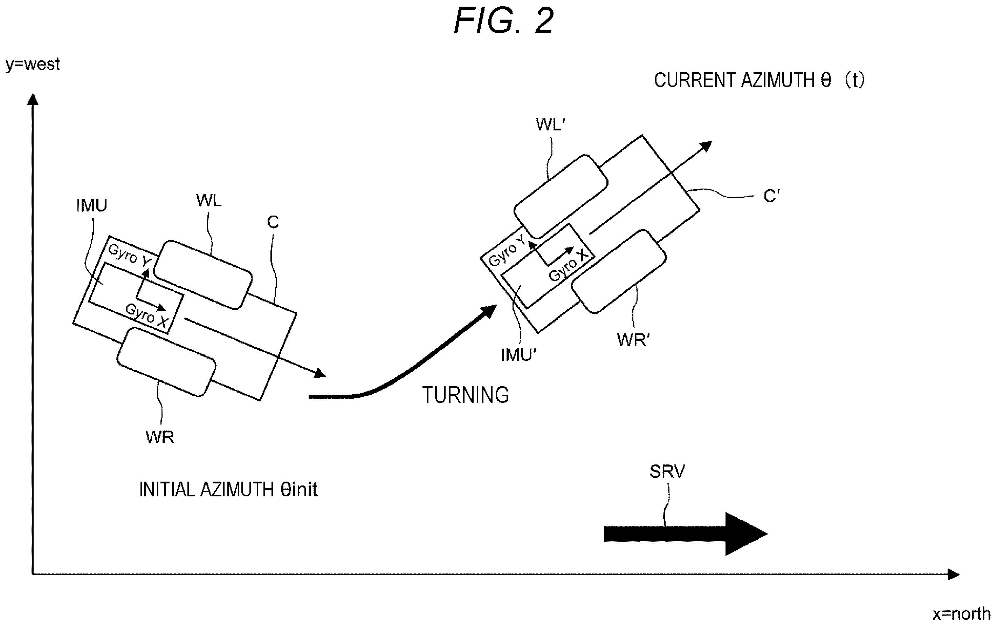

For example, as illustrated in Fig. 2, it is assumed that the mobile object C on which the IMU is mounted changes its attitude like the mobile object C' by moving so as to turn along the arrow.

Note that the mobile objects C and C' in Fig. 2 have the same configuration corresponding to each other, and schematically express the position and attitude before and after the attitude change. Furthermore, in a case where it is not necessary to distinguish both the mobile objects C and C', the mobile objects C and C' are simply referred to as the mobile object C, and the other configurations are similar.

Furthermore, the mobile object C includes the IMU that operates according to the operation principle described with reference to Fig. 1 and includes drive wheels WL and WR on the left and right, and the drive wheels WL and WR are driven while rotating about the respective rotation axes, so that the mobile object C moves to the mobile object C' and changes the attitude.

Note that the IMU' and the left and right drive wheels WL' and WR' in the mobile object C' are the IMU in a state where the mobile object C has moved to the mobile object C' and the left and right drive wheels WL and WR, and both have the same configuration.

Furthermore, in Fig. 2, the vertical axis represents the eastward direction (y = west) of the reference coordinate system, and the horizontal axis represents the north direction (x = north) of the reference coordinate system.

That is, in Fig. 2, the mobile object C expresses the initial position and the initial attitude at the initial time t=0, and the mobile object C' expresses the current position and the current attitude at the current time t (= 0 and later). Here, it is assumed that the mobile objects C and C' exist at substantially the same latitude (about within 0.1 degrees).

At this time, the rotation plane component norm (= 15.04 deg/hour × cos(latitude)) is always set to a fixed value in the north direction as indicated by the vector SRV in Fig. 2.

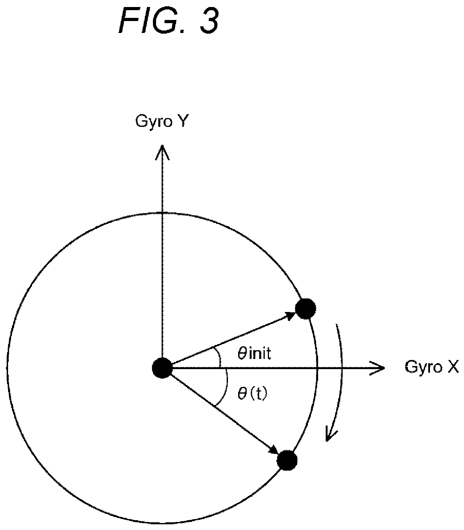

On the other hand, in a case where the sensor coordinate system of the gyro sensor of the IMU is GyroX corresponding to the traveling direction of the mobile objects C and C' and GyroY corresponding to the side direction of the mobile objects C and C' perpendicular to the traveling direction illustrated in Fig. 2, the vector SRV expressing the rotation plane component norm (=15.04 deg/hour × cos(latitude)) detected in the gyro sensors of the IMU and IMU' is detected, for example, as illustrated in Fig. 3.

That is, as illustrated in Fig. 3, in a case where the sensor coordinate system is expressed with the vertical axis as GyroY and the horizontal axis as GyroX, the vector SRV is detected as the initial direction θinit in the gyro sensor of the IMU in the mobile object C before the attitude change, and the gyro sensor value indicating the north direction in the gyro sensor of the IMU' in the mobile object C' after the attitude change is detected as the current azimuth θ(t).

As described above, in the reference coordinate system, as illustrated in Fig. 2, in a case where the attitude changes so as to turn from the mobile object C to the mobile object C', the traveling direction of the mobile objects C and C' changes from the east direction to the west direction by turning.

At this time, in the sensor coordinate system, as indicated by an arrow in Fig. 3, the polarity of the gyro sensor value is inverted with respect to the reference coordinate system while the magnitude of the plane projection component remains constant depending on the azimuths of the mobile objects C and C'.

As described above, since the gyro sensor value in the sensor coordinate system of the gyro sensor changes with the movement of the mobile objects C and C', it is difficult to set an appropriate initial azimuth from the gyro sensor value itself of the gyro sensor of the IMU mounted on the mobile object that is moving.

<Error due to rotation component>

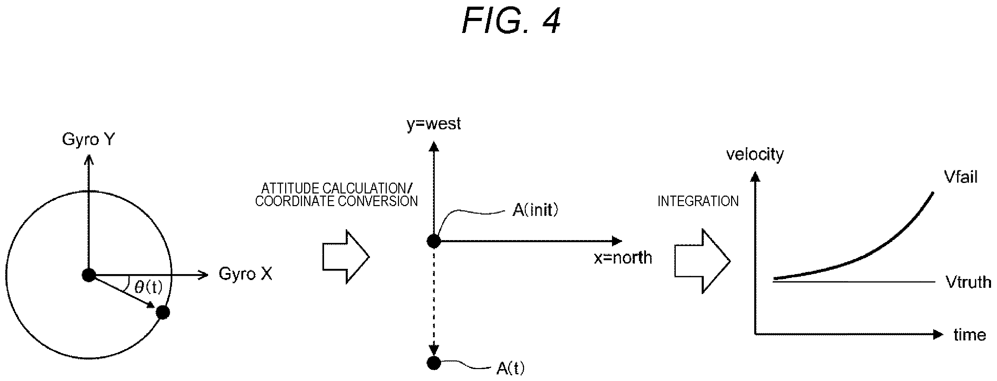

Furthermore, since the rotation component measured in the gyro sensor of the IMU of the mobile object C is equivalent to the bias value measured in the stationary state, as illustrated in the left part of Fig. 4, the current azimuth θ(t) in the gyro sensor value at the time t is detected in a state where the bias component equivalent to the rotation component is included.

Therefore, by the attitude calculation, the attitude q of the reference coordinate system is obtained by integrating the gyro sensor value θ(t), and the acceleration A obtained by converting the acceleration sensor value a of the sensor coordinate system into the reference coordinate system on the basis of the obtained attitude q of the reference coordinate system is obtained as the acceleration A(t) to which a bias is added with respect to the originally obtained acceleration A(init) as illustrated in the central portion of Fig. 4, and an error diverging in the east direction is added.

Moreover, as illustrated in the right part of Fig. 4, the velocity obtained by repeating the integration using the acceleration of the reference coordinate system to which the error of the bias component is added is obtained as the velocity Vfail in a state where the error with the lapse of time is diffused with respect to the original velocity Vtruth.

That is, in a case where the gyro sensor value is used without considering the rotation component, the error of the bias component corresponding to the rotation component is accumulated by integration, and the error diverges in the time direction.

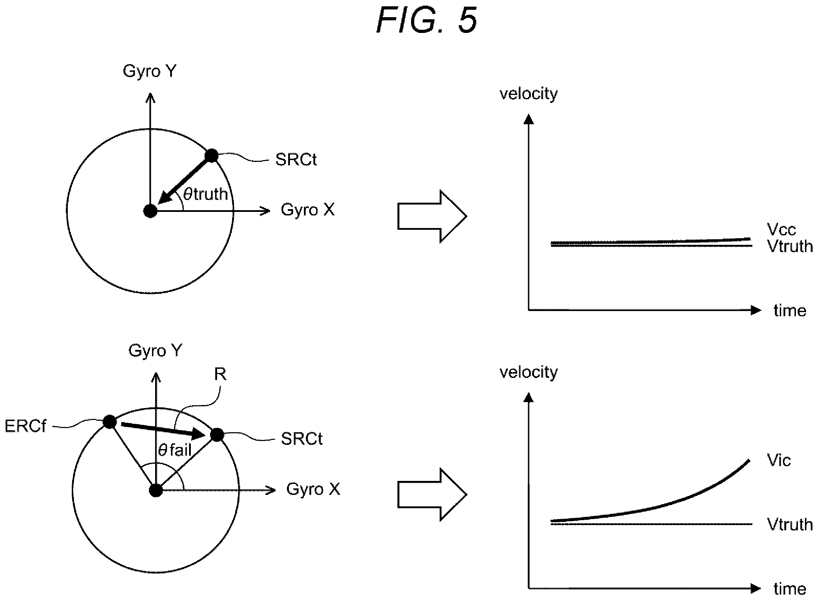

Therefore, as illustrated in the upper left part of Fig. 5, the azimuth angle θtruth corresponding to the true rotation component SRCt is subtracted from the observation value of the gyro sensor and used to suppress the error diffusion, and for example, as illustrated in the upper right part of Fig. 5, it is possible to obtain the velocity Vcc in a state where the error diffusion is appropriately suppressed with respect to the original velocity Vtruth with respect to the lapse of time.

Note that, although not illustrated, error diffusion is similarly suppressed for a position obtained by integrating the velocity Vcc.

Furthermore, the correction of the error caused by the rotation component by subtracting the azimuth angle θtruth corresponding to the true rotation component SRCt from the gyro sensor value θ(t) is hereinafter also referred to as rotation compensation.

On the other hand, as illustrated in the lower left part of Fig. 5, in a case where the incorrect rotation component ERCf at the incorrect azimuth angle θfail different from the azimuth angle θtruth corresponding to the true rotation component SRCt is subtracted from the observation value of the gyro sensor, the rotation compensation residual R expressed by the vector in the drawing is included. Therefore, error diffusion occurs. For example, as illustrated in the lower right part of Fig. 5, appropriate rotation compensation cannot be realized with respect to the original velocity Vtruth, and the error is obtained as the velocity Vic in a state of divergence with respect to the passage of time.

From the above, it can be seen that the azimuth θ(t) at the arbitrary time t is uniquely determined with respect to the initial azimuth θinit and the rotation compensation residual R of the acceleration at the arbitrary time t is uniquely determined with respect to the azimuth θ(t) at the time t if the IMUs are exactly the same.

From these, since the rotation compensation residual R of the acceleration at the arbitrary time t depends on the initial azimuth θinit, it can be considered that the acceleration error and the velocity error caused by the rotation compensation residual R depend only on the initial azimuth θinit.

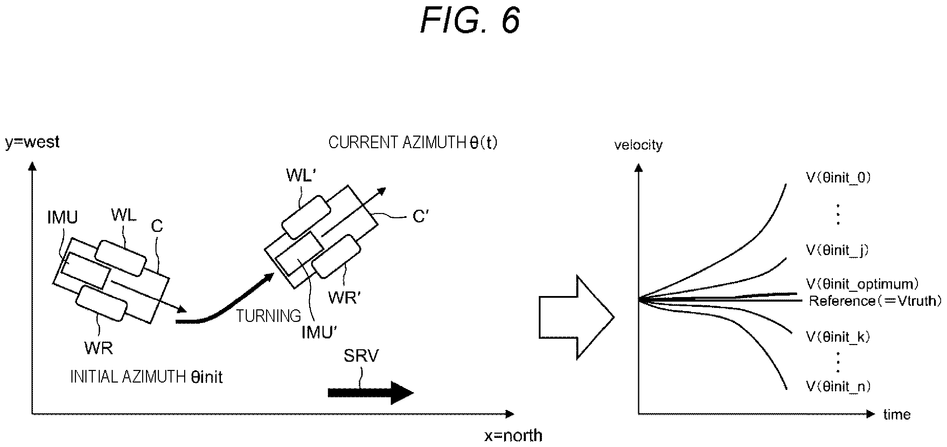

That is, as illustrated in the left part of Fig. 6, assuming n initial azimuths θinit_0 to θinit_n set when all azimuths of 360 degrees are divided by n, for example, the velocity in the azimuth θ(t) when the mobile object C in the initial azimuth θinit at the time t=0 turns like the mobile object C' at the time t is expressed as the velocities V(θinit_0) to V(θinit_n) illustrated in the right part of Fig. 6.

Then, among the velocities V(θinit_0) to V(θinit_n), the initial azimuth is the optimal initial azimuth at which the error is the minimum velocity V(θinit_optimum) with respect to the reference value (Reference) corresponding to the appropriate velocity Vtruth.

Therefore, in the present disclosure, a method of evaluating a velocity error using inertial navigation derived from an angular velocity including a rotation compensation residual is adopted.

That is, in the dimension of the velocity, since it is possible to acquire a reference that has a small variation and does not require an external sensor, a method of evaluating the velocity error is adopted.

More specifically, as a specific NHC (non-holonomic) constraint of the drive wheel of the mobile object, an initial azimuth in which the velocity of the mobile object main body in the lateral direction is always 0 is searched using a constraint condition that the velocity of the mobile object main body in the lateral direction is always 0.

Here, the non-holonomic constraint condition is a constraint condition that constrains the degree of freedom of at least one of the six axes of attitude and velocity.

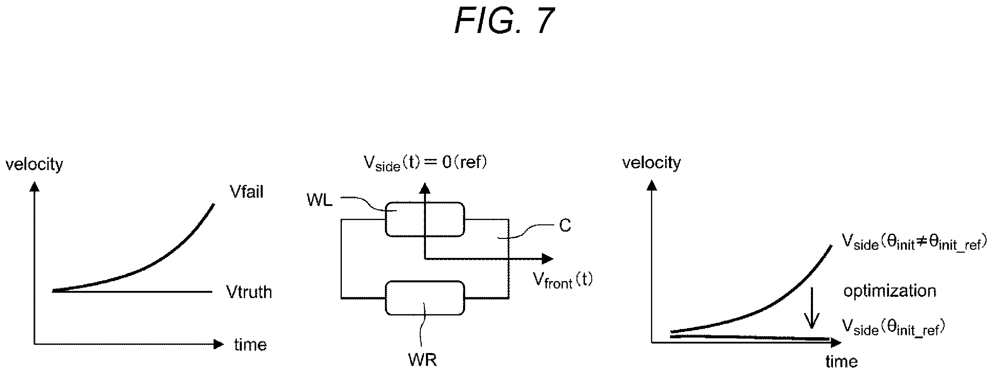

That is, as illustrated in the left part of Fig. 7, simply using the gyro sensor value of the IMU causes error diffusion in the velocity due to the rotation compensation residual.

Therefore, as illustrated in the central portion of Fig. 7, when the velocity in the rotation axis direction of the drive wheels WL and WR in the mobile object C, that is, the forward direction of the mobile object C is Vfront(t), and the velocity in the lateral direction which is the perpendicular direction thereof is Vside(t), the velocity Vside(t) in the rotation axis direction of the drive wheels WL and WR always becomes substantially zero.

As a result, as illustrated in the right part of Fig. 7, as described above, a plurality of initial azimuths are set, the velocities Vside(θInit) in the rotation axis directions of the drive wheels WL and WR, that is, in the lateral direction are obtained, and as indicated by the velocity Vside(θinit_ref), an initial azimuth to be minimized so that the velocity becomes substantially zero is searched for as an appropriate initial azimuth, thereby achieving optimization.

Note that, in the right part of Fig. 7, the velocity Vside(θinit_ref) expresses the velocity obtained by minimizing the velocity in the lateral direction of the mobile object C obtained from an appropriate initial azimuth, and the velocity Vside(θinit≠θinit_ref) expresses the velocity in the lateral direction of the mobile object C obtained from an inappropriate initial azimuth.

<<2. Preferred embodiment>>

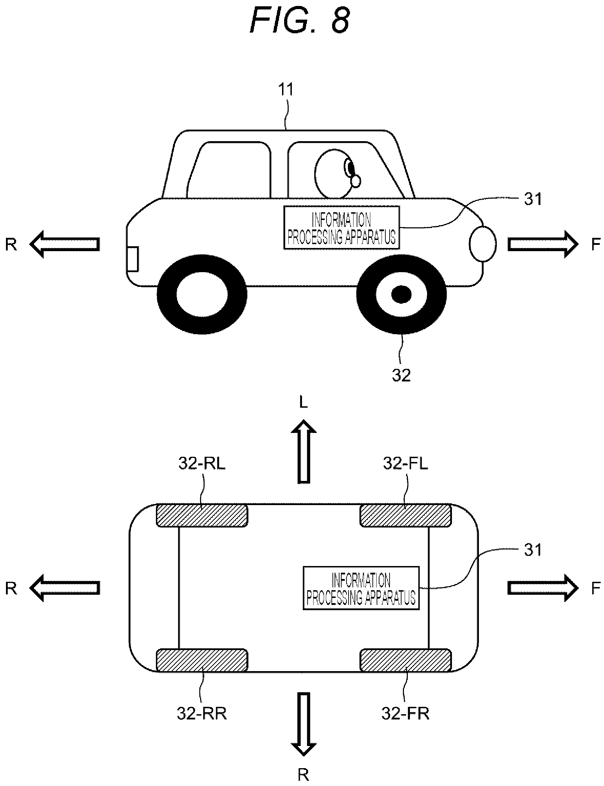

Next, a configuration example of a preferred embodiment of the mobile object of the present disclosure will be described with reference to Fig. 8.

The mobile object 11 in Fig. 8 is a so-called vehicle, and is provided with driving wheels 32-FL, 32-FR, 32-RL, and 32-RR for traveling, and is configured to be able to move forward F and backward R and turn right or left. Note that the drive wheels 32-FL, 32-FR, 32-RL, and 32-RR are simply referred to as drive wheels 32 especially in a case where there is no need to distinguish.

However, it is assumed that, although there is a possibility that a phenomenon such as slip occurs in the rotation axis direction of the drive wheel 32, that is, in the left direction L and the right direction R which are perpendicular directions (lateral directions) to the side surface of the mobile object 11, the drive wheel cannot basically move.

Note that the drive wheel 32 is merely an example of a configuration of a drive mechanism of the mobile object 11, and may have another configuration as long as it cannot move in a direction perpendicular to the driving direction. For example, the drive wheel may have a driving configuration of an endless track such as a caterpillar, or may be a railway, a bicycle, a motorcycle, or the like.

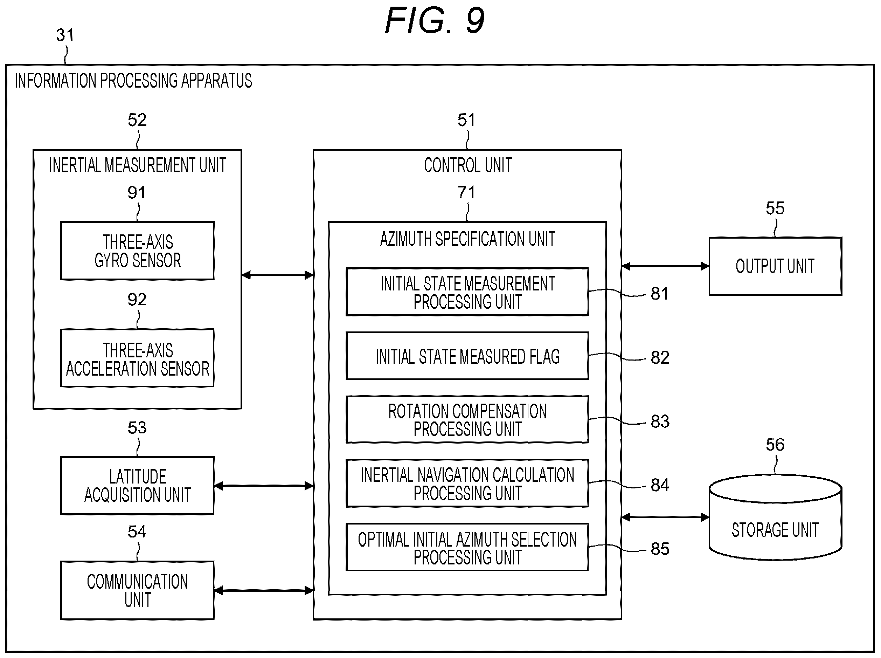

The information processing apparatus 31 including an inertial measurement unit 52 (Fig. 9) to be described later is mounted on the mobile object 11.

The information processing apparatus 31 has a configuration capable of detecting its own position and attitude without obtaining information from an external sensor, and at that time, can specify its own initial attitude while moving.

The information processing apparatus 31 may be configured to operate in conjunction with a main body or a drive system of the mobile object 11 having a function such as a navigation device integrated with the configuration of the mobile object 11 electrically or by communication, or may be configured not to interlock with the main body or the drive system of the mobile object 11 such as a tablet or a smartphone carried by a driver or the like of the mobile object 11 at all.

<Configuration example of information processing apparatus>

Next, a configuration example of the information processing apparatus 31 will be described with reference to Fig. 9.

The information processing apparatus 31 in Fig. 9 includes a control unit 51, the inertial measurement unit 52, a latitude acquisition unit 53, a communication unit 54, an output unit 55, and a storage unit 56.

The control unit 51 includes a processor, a memory, and the like, and has a function of controlling the entire information processing apparatus 31. For example, the control unit 51 controls measurement processing in the inertial measurement unit 52.

The control unit 51 controls communication processing in the communication unit 54. Specifically, the control unit 51 causes the communication unit 54 to transmit information output according to the processing executed by the control unit 51 to an external device.

The control unit 51 causes the output unit 55 to display information corresponding to the processing result executed by the control unit 51.

The control unit 51 controls storage processing in the storage unit 56, and specifically stores information output according to processing executed by the control unit 51 in the storage unit 56.

The control unit 51 has a function of executing processing based on the input information. For example, the control unit 51 executes processing of specifying an initial azimuth of the information processing apparatus 31 by movement from the inertial data input from the inertial measurement unit 52 when the information processing apparatus 31 moves, and specifies the current attitude (azimuth), velocity, and position of the mobile object 11 on the basis of the initial azimuth.

More specifically, the control unit 51 includes an azimuth specification unit 71 that estimates an initial azimuth of the information processing apparatus 31 and specifies an azimuth at the present time on the basis of the estimated initial azimuth.

The azimuth specification unit 71 includes an initial state measurement processing unit 81, an initial state measured flag 82, a rotation compensation processing unit 83, an inertial navigation calculation processing unit 84, and an optimal initial azimuth selection processing unit 85.

The azimuth specification unit 71 executes an azimuth specification process, estimates an appropriate initial attitude of the information processing apparatus 31, and specifies the current attitude, velocity, and position.

More specifically, the azimuth specification unit 71 sets 360 instances in increments of 1 degree (deg) as the initial azimuth, specifies an optimal initial azimuth among 360 instances from 0 degrees to 359 degrees, specifies the current azimuth on the basis of the specified initial azimuth, and specifies the velocity and position together.

The initial state measurement processing unit 81 executes an initial state measurement processing, sets the initial attitude for each instance on the basis of gravity and the initial azimuth, and sets the initial state measured flag 82 to ON in a case where the initial attitude can be set.

The initial state measurement processing unit 81 receives a setting input from the user regarding the presence or absence of gyro bias estimation as an option in the initial state measurement, and in a case where the presence of gyro bias estimation is set, performs gyro bias estimation in addition to the setting of the initial attitude, and sets a gyro bias value in consideration of the initial attitude and the gyro bias estimation. Note that the gyro bias estimation is desirably performed in a case where a fixed bias value is provided.

The rotation compensation processing unit 83 executes a rotation compensation process, calculates a rotation component based on the initial azimuth and the latitude acquired by the latitude acquisition unit 53 for each instance, and calculates a gyro compensation value that is a gyro sensor value not including an error by subtracting the rotation component from the gyro sensor value including the angular velocity.

Note that, in a case where the gyro bias value is estimated, the rotation compensation processing unit 83 calculates the gyro compensation value by subtracting the gyro bias value in addition to the rotation component from the gyro sensor value by the rotation compensation process.

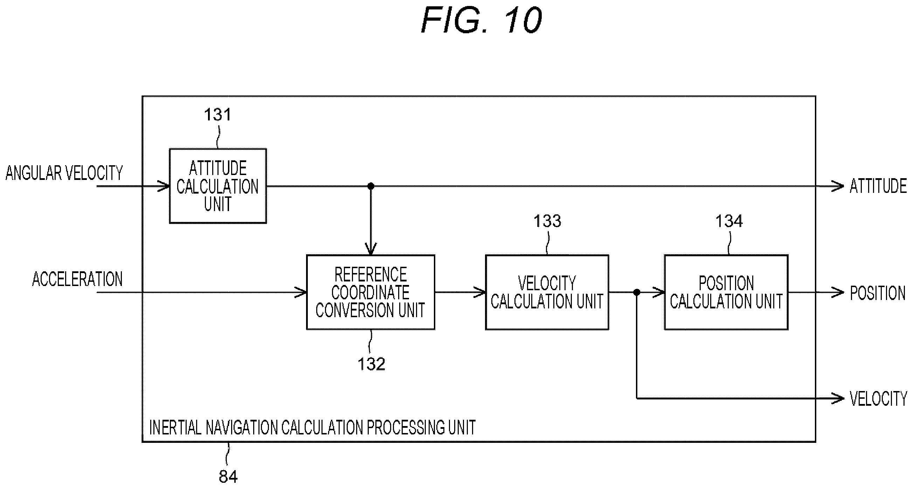

The inertial navigation calculation processing unit 84 executes an inertial navigation calculation process, and calculates an attitude, a velocity, and a position of the reference coordinate system from an angular velocity which is inertial data acquired by the inertial measurement unit 52 and is a gyro sensor value of the sensor coordinate system and an acceleration which is an acceleration sensor value. Note that the configuration of the inertial navigation calculation processing unit 84 will be described later in detail with reference to Fig. 10.

The optimal initial azimuth selection processing unit 85 executes an optimal initial azimuth selection process, and selects, as an optimal initial azimuth, an initial azimuth set to an instance in which a lateral velocity, which is a velocity in a direction perpendicular to the side surface of the mobile object 11 at the same time, that is, a lateral direction of the mobile object, takes a minimum value, among the 360 instances for each initial azimuth.

Note that, in the present embodiment, an example will be described in which the initial azimuth set in the instance in which the lateral velocity is substantially 0 is selected as the optimal initial azimuth. However, since it is sufficient that the non-holonomic constraint can be realized, for example, in a case where the forward velocity is constant at a predetermined velocity, it is also possible to set the constraint condition that the forward direction is constant at the predetermined velocity. In this case, the constraint condition is that an error between the difference between the velocity in the forward direction and the predetermined velocity serving as the reference value and the reference value is substantially zero.

Therefore, the optimal initial azimuth selection processing unit 85 may obtain an error from the reference value according to the constraint condition and select an instance with the minimum error. That is, in this example, since the constraint condition is that the lateral velocity is 0, the reference value is 0, and thus, the optimal initial azimuth selection processing unit 85 calculates a difference between the lateral velocity and 0, which is the reference value, as the lateral velocity error, and selects the initial azimuth set to the instance in which the lateral velocity error is minimized as the optimal initial azimuth.

The inertial measurement unit 52 is a so-called inertial measurement unit (IMU) having a function of measuring inertial data related to the information processing apparatus 31.

More specifically, the inertial measurement unit 52 includes a three-axis gyro sensor 91, and measures an angular velocity that is a change amount of the attitude of the information processing apparatus 31 as one of the inertial data. The inertial measurement unit 52 includes a three-axis acceleration sensor 92, and measures acceleration, which is a change amount of a moving velocity of the information processing apparatus 31, as one of inertial data. Furthermore, the inertial measurement unit 52 outputs the angular velocity and the acceleration, which are the inertial data measured by the inertial measurement device, to the control unit 51. Note that, hereinafter, the angular velocity detected by the three-axis gyro sensor 91 is also referred to as a gyro value, and the acceleration detected by the three-axis acceleration sensor 92 is also referred to as an acceleration value.

The communication unit 54 has a function of communicating with an external device. For example, in communication with an external device, the communication unit 54 outputs information received from the external device to the control unit 51. Furthermore, the communication unit 54 transmits information input from the control unit 51 to an external device in communication with the external device.

<Configuration example of inertial navigation calculation processing unit>

Next, a configuration example of the inertial navigation calculation processing unit 84 in Fig. 10 will be described.

The inertial navigation calculation processing unit 84 in Fig. 10 detects the attitude, velocity, and position in the three-dimensional space of the mobile object 11 on which the information processing apparatus 31 is mounted on the basis of the three-axis angular velocities and the three-axis accelerations detected by the inertial measurement unit 52.

More specifically, the inertial navigation calculation processing unit 84 includes an attitude calculation unit 131, a reference coordinate conversion unit 132, a velocity calculation unit 133, and a position calculation unit 134.

When acquiring the gyro value that is the information of the angular velocity of the sensor coordinate system supplied from the three-axis gyro sensor 91 of the inertial measurement unit 52, the attitude calculation unit 131 performs integration, obtains an angle with respect to three axes indicating the attitude of the reference coordinate system (global coordinate system) as an attitude, and outputs the attitude according to the initial azimuth set for each instance.

The reference coordinate conversion unit 132 converts the information on the accelerations in the xyz axes of the sensor coordinate system supplied from the three-axis acceleration sensor 92 of the inertial measurement unit 52 into the information on the acceleration in the reference coordinate system on the basis of the information on the angle indicating the attitude in the reference coordinate system obtained in the attitude calculation unit 131 for each instance, and outputs the information to the velocity calculation unit **133.**

The velocity calculation unit 133 calculates and outputs the velocity of the reference coordinate system by integrating the acceleration of the reference coordinate system for each instance.

The position calculation unit 134 calculates and outputs the position of the reference coordinate system by integrating the velocity in the reference coordinate system calculated by the velocity calculation unit 133 for each instance.

As a result, the attitude (angle), the velocity, and the position of the reference coordinate system for each instance of the mobile object 11 on which the information processing apparatus 31 including the inertial measurement unit 52 is mounted are detected.

<Azimuth specification process>

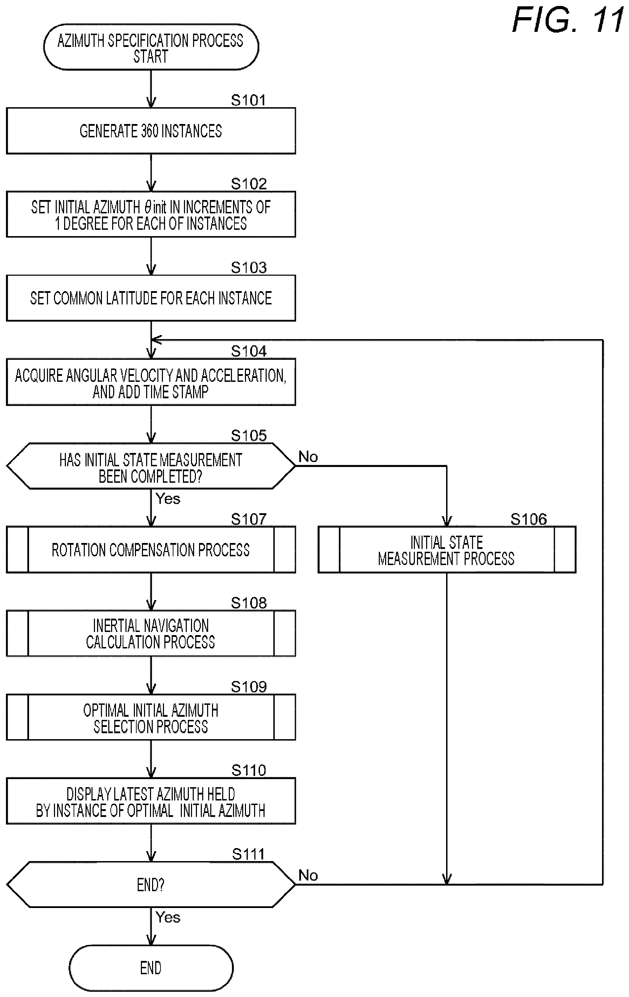

Next, an azimuth specifying process by the azimuth specification unit 71 will be described with reference to a flowchart in Fig. 11.

In step S101, the azimuth specification unit 71 generates 360 instances for setting the initial azimuth in increments of 1 degree (deg).

In step S102, the azimuth specification unit 71 sets the instance ID to 0 to 359 for each of 360 instances, and sets the initial azimuth $\theta$init ($\theta$init = 0 to 359) in increments of 1 degree (deg) for each instance.

In step S103, the azimuth specification unit 71 controls the latitude acquisition unit 53 to set a common latitude for each instance.

Note that the common latitude only needs to be set within a range of about 0.1deg (distance of about 10 km), and may be set by communication with the GPS, Wifi, a base station, or the like, or may be a value input and set by the user in advance, or in a case where the common latitude is used in a fixed area, the same latitude may be used after being set once.

In step S104, the azimuth specification unit 71 acquires information of a gyro value including angular velocities of xyz axes supplied from the three-axis gyro sensor 91 of the inertial measurement unit 52 and an acceleration value including acceleration of xyz axes of the sensor coordinate system supplied from the three-axis acceleration sensor 92.

In step S105, the azimuth specification unit 71 determines whether or not the initial state measurement has been completed based on whether or not the initial state measured flag 82 is set to the ON state.

In a case where it is determined in step S105 that the initial state measured flag 82 is not set to the ON state and the initial state measurement has not been completed, the process proceeds to step S106.

In step S106, the azimuth specification unit 71 controls the initial state measurement processing unit 81 to execute the initial state measurement process, determines the initial attitude for each instance from the gravity and the initial azimuth, sets the initial state measured flag 82 to ON, and the process returns to step S104.

At this time, in a case where estimation of the gyro bias value is optionally set, the gyro bias value is also estimated.

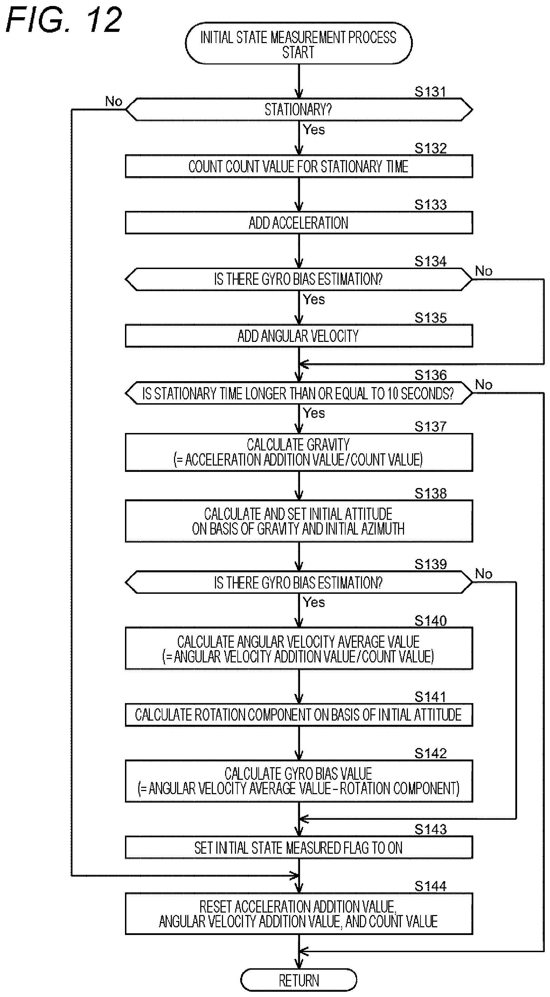

Note that details of the initial state measurement process will be described later with reference to the flowchart of Fig. 12.

On the other hand, in step S105, in a case where the initial state measured flag 82 is set to the ON state and it is determined that the initial state measurement has been completed, the process proceeds to step S107.

In step S107, the azimuth specification unit 71 controls the rotation compensation processing unit 83 to execute the rotation compensation process and calculate a gyro compensation value.

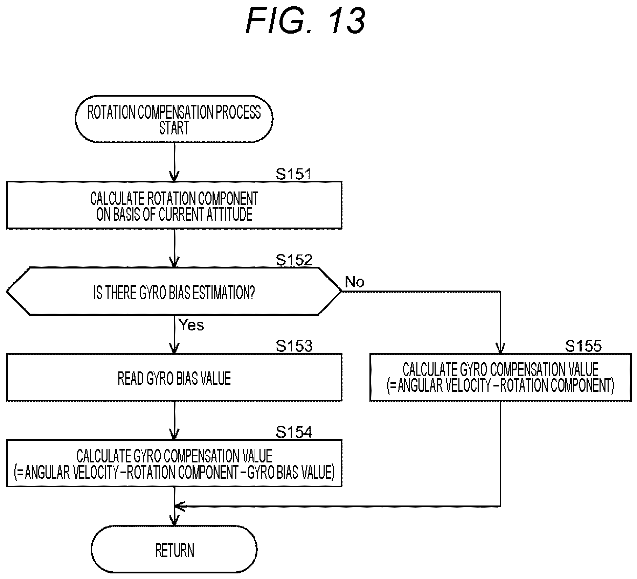

Note that the rotation compensation process will be described later in detail with reference to the flowchart of Fig. 13.

In step S108, the azimuth specification unit 71 controls the inertial navigation calculation processing unit 84 to execute the inertial navigation calculation process, and calculates information of the acceleration, the velocity, and the position of the reference coordinate system for each instance.

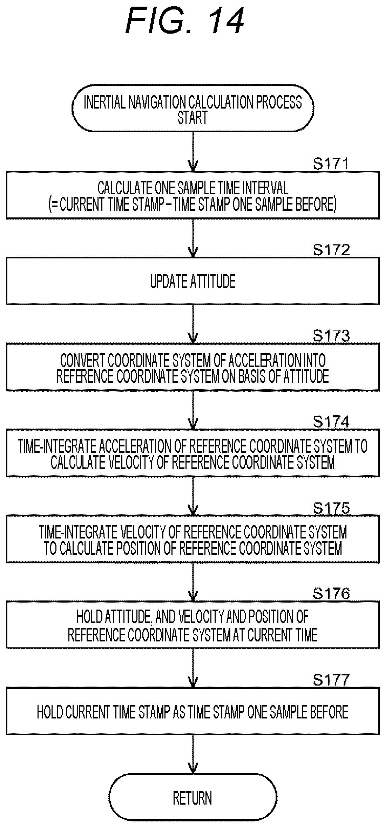

Note that the inertial navigation calculation process will be described later in detail with reference to the flowchart of Fig. 14.

In step S109, the azimuth specification unit 71 controls the optimal initial azimuth selection processing unit 85 to execute the optimal initial azimuth selection process to calculate a lateral velocity error in each instance, specifies an instance in which the calculated lateral velocity error is minimized, and specifies an initial azimuth set in the specified instance as an optimal initial azimuth.

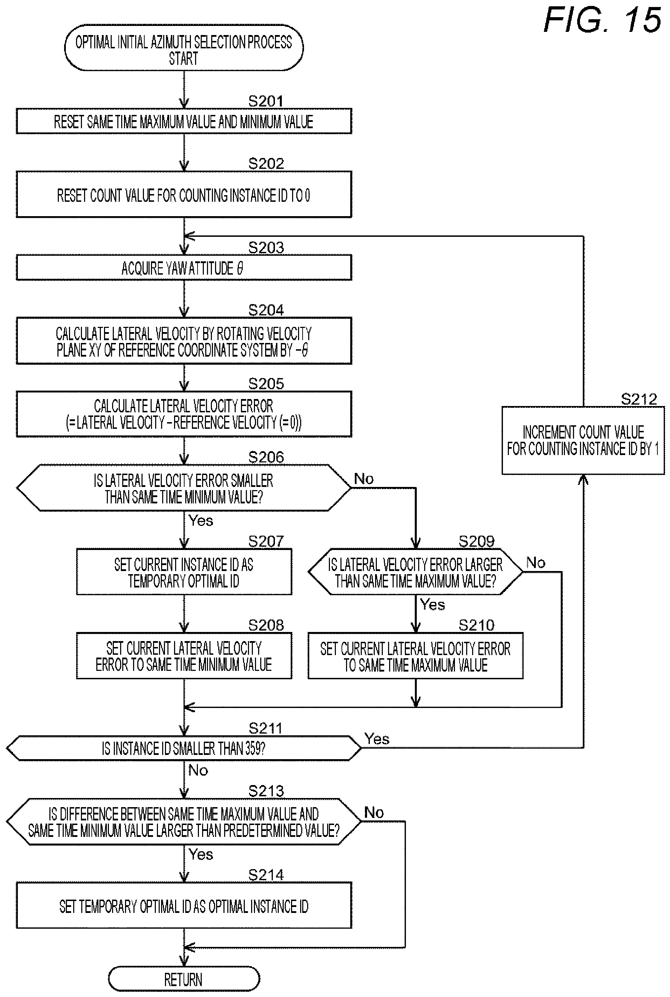

Note that details of the optimal initial azimuth selection process will be described later with reference to the flowchart of Fig. 15.

In step S110, the azimuth specification unit 71 presents the latest azimuth held by the instance of the optimal initial azimuth to the user as the current azimuth.

In step S111, it is determined whether or not an instruction for end is given, and in a case where it is determined that there is no instruction for end, the process returns to step S104, and the subsequent processing is repeated.

That is, the processing of steps S104, S105, and S107 to S111 is repeated until the end of the process is instructed.

Then, in step S111, when the end of the process is instructed, the process ends.

<Initial state measurement process>

Next, the initial state measurement process will be described with reference to a flowchart of Fig. 12.

In step S131, the initial state measurement processing unit 81 determines whether or not the information processing apparatus 31 (mobile object 11) is in a stationary state on the basis of the inertial data by the inertial measurement unit 52.

In a case where it is determined in step S131 that the information processing apparatus is stationary, the process proceeds to step S132.

In step S132, the initial state measurement processing unit 81 starts counting a count value for counting the stationary time.

In step S133, the initial state measurement processing unit 81 adds the acceleration and calculates an acceleration addition value.

In step S134, the initial state measurement processing unit 81 determines whether or not processing including optional gyro bias estimation is set.

In a case where the processing including the gyro bias estimation is set in step S134, the process proceeds to step S135.

In step S135, the initial state measurement processing unit 81 adds the gyro value including the angular velocity in the inertial data by the inertial measurement unit 52 to calculate the gyro addition value. Note that, in a case where the processing including the gyro bias estimation is not set in step S134, the processing in step S135 is skipped.

In step S136, the initial state measurement processing unit 81 determines whether or not the stationary time is longer than or equal to a predetermined time (for example, 10 seconds) on the basis of the count value of the stationary time.

In a case where it is determined in step S136 that the stationary time is the predetermined time or more, the process proceeds to step S137.

In step S137, the initial state measurement processing unit 81 calculates the gravitational acceleration by dividing the acceleration addition value by a count value for counting time.

In step S138, the initial state measurement processing unit 81 calculates and sets the initial attitude for each instance on the basis of gravity and the initial azimuth.

In step S139, the initial state measurement processing unit 81 determines whether or not processing including optional gyro bias estimation is set.

In step S139, in a case where the gyro bias estimation is set, the process proceeds to step S140.

In step S140, the initial state measurement processing unit 81 calculates an angular velocity average value (gyro average value) for each instance by dividing an angular velocity addition value (gyro addition value), which is an addition value of angular velocities detected by the three-axis gyro sensor 91, by a count value for counting time.

In step S141, the initial state measurement processing unit 81 calculates the rotation component for each instance on the basis of the initial attitude.

In step S142, the initial state measurement processing unit 81 performs estimation for each instance by calculating a gyro bias value by removing a rotation component from an angular velocity average value (gyro average value).

In step S143, the initial state measurement processing unit 81 sets the initial state measured flag 82 to an ON state.

In step S144, the initial state measurement processing unit 81 resets the acceleration addition value, the angular velocity addition value (gyro addition value), and the count value for counting time.

On the other hand, in a case where it is determined in step S131 that the subject is not stationary, the processing in steps S133 to S143 is skipped.

Furthermore, in a case where it is determined in step S136 that the stationary time is not longer than or equal to the predetermined time, the processing of steps S137 to S144 is skipped.

Moreover, in a case where it is determined in step S139 that the gyro bias estimation is not set, the processing in steps S140 to S142 is skipped.

By the above processing, the initial state measurement is performed, and the initial attitude and the gyro bias value are set for each instance.

<Rotation compensation process>

Next, the rotation compensation process by the rotation compensation processing unit 83 will be described with reference to a flowchart of Fig. 13.

In step S151, the rotation compensation processing unit 83 calculates the rotation component on the basis of the current attitude for each instance.

In step S152, the rotation compensation processing unit 83 determines whether or not gyro bias estimation is optionally set.

In step S152, in a case where the gyro bias estimation is set, the process proceeds to step S153.

In step S153, the rotation compensation processing unit 83 reads the gyro bias value estimated for each instance.

In step S154, the rotation compensation processing unit 83 calculates the gyro compensation value for each instance by subtracting the rotation component and the gyro bias value from the gyro value to be the detection value of the three-axis gyro sensor 91.

On the other hand, in a case where it is determined in step S152 that the gyro bias estimation is not set, the process proceeds to step S155.

In step S155, the rotation compensation processing unit 83 calculates the gyro compensation value for each instance by subtracting the rotation component from the gyro value to be the detection value of the three-axis gyro sensor 91.

Through the above processing, the gyro compensation value is calculated for each instance.

<Inertial navigation calculation process>

Next, the inertial navigation calculation process by the inertial navigation calculation processing unit 84 will be described with reference to a flowchart of Fig. 14.

In step S171, the inertial navigation calculation processing unit 84 calculates one sample time interval by subtracting the time stamp one sample before from the current time stamp.

In step S172, the inertial navigation calculation processing unit 84 controls the inertial measurement unit 52 to update the gyro attitude for each instance. That is, the attitude calculation unit 131 of the inertial navigation calculation processing unit 84 calculates and updates the information of the attitude of the reference coordinate system on the basis of the gyro compensation value for each instance of the angular velocity in the three-axis direction detected by the three-axis gyro sensor 91 of the inertial measurement unit 52, and outputs the information to the reference coordinate conversion unit 132.

In step S173, the three-axis acceleration sensor 92 detects the acceleration in the sensor coordinate system in the triaxial direction and outputs the acceleration to the reference coordinate conversion unit 132. The reference coordinate conversion unit 132 converts the acceleration in the sensor coordinate system into the acceleration in the reference coordinate system on the basis of the information on the attitude of the reference coordinate system for each instance, and outputs the acceleration to the velocity calculation unit 133.

In step S174, the velocity calculation unit 133 calculates the velocity of the reference coordinate system by time-integrating the acceleration of the reference coordinate system for each instance, and outputs the velocity to the position calculation unit 134.

In step S175, the position calculation unit 134 calculates and outputs the position of the reference coordinate system by time-integrating the velocity of the reference coordinate system for each instance.

In step S176, the inertial navigation calculation processing unit 84 stores the attitude, the velocity and the position of the reference coordinate system in the storage unit 56 in association with the time stamp indicating the current time for each instance.

In step S177, the inertial navigation calculation processing unit 84 holds a current time stamp as a time stamp one sample before.

Through the above processing, information of the attitude, the velocity, and the position is sequentially stored together with the time stamp for each instance on the basis of the measurement result of the inertial measurement unit 52.

<Optimal initial azimuth selection process>

Next, the optimal initial azimuth selection process by the optimal initial azimuth selection processing unit 85 will be described with reference to a flowchart in Fig. 15.

In step S201, the optimal initial azimuth selection processing unit 85 resets a same time maximum value and a same time minimum value to 0.

In step S202, the optimal initial azimuth selection processing unit 85 resets the count value for counting the instance ID to 0.

In step S203, the optimal initial azimuth selection processing unit 85 acquires the yaw attitude θ among the attitude information of the current instance ID.

In step S204, the optimal initial azimuth selection processing unit 85 calculates the lateral velocity by rotating the velocity in the reference coordinate system of the current instance ID by -θ in the yaw direction on a velocity plane XY.

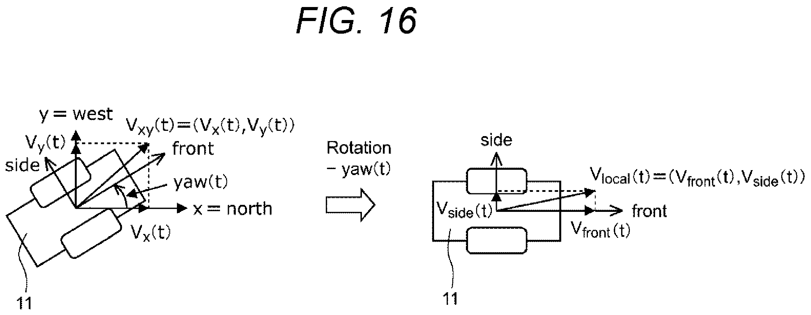

That is, as illustrated in the left part of Fig. 16, in a case where the velocity Vxy(t) of the mobile object 11 set with respect to the xy coordinate system which is the reference coordinate system is expressed by (Vx(t), Vy(t)), it is assumed that the traveling direction of the mobile object 11 is shifted by the angle yaw(t) in the yaw direction with respect to the x(= north) axis.

Here, as illustrated in the right part of Fig. 16, when the xy coordinate system is rotated by the angle yaw(t) to be converted into the coordinate system of the mobile object 11 having the forward direction (front) of the mobile object 11 and the side direction (side) as axes, the velocity Vlocal(t) expressed in the coordinate system of the mobile object 11 is expressed by (Vfront (t), Vside(t)).

At this time, Vfront(t) and Vside(t) are expressed by the following Formulas (1) and (2), respectively.

[Math. 1]

$$V_{front}(t) = cos(-yaw(t)) \, V_x(t) - sin(-yaw(t)) \, V_y(t)$$

$\qquad \cdots (1)$

[Math. 2]

$$V_{side}(t) = sin(-yaw(t)) \, V_x(t) + cos(-yaw(t)) \, V_y(t)$$

$\qquad \cdots (2)$

Since the optimal initial azimuth is the velocity in the side direction of the mobile object 11, that is, the lateral velocity is the minimum, the optimal initial azimuth selection processing unit 85 calculates Vside(t) expressed by the above-described Formula (2) as the lateral velocity for each instance.

In step S205, the optimal initial azimuth selection processing unit 85 subtracts the reference velocity (= 0) from the lateral velocity to calculate a lateral velocity error. Note that, here, since a non-holonomic constraint condition is that the lateral velocity is substantially 0, the reference velocity is 0.

In step S206, the optimal initial azimuth selection processing unit 85 determines whether or not the lateral velocity error is smaller than the same time minimum value representing the minimum value among all the instances at the same time.

In a case where it is determined in step S206 that the lateral velocity error is smaller than the same time minimum value, the process proceeds to step S207.

In step S207, the optimal initial azimuth selection processing unit 85 sets the current instance ID as the temporary optimal ID.

In step S208, the optimal initial azimuth selection processing unit 85 sets the current lateral velocity error to the same time minimum value.

On the other hand, in a case where it is determined in step S206 that the lateral velocity error is not smaller than the same time minimum value, the process proceeds to step S209.

In step S209, the optimal initial azimuth selection processing unit 85 determines whether or not the lateral velocity error is larger than the same time maximum value representing the maximum value among all the instances at the same time.

In a case where it is determined in step S209 that the lateral velocity error is larger than the same time maximum value, the process proceeds to step S210.

In step S210, the optimal initial azimuth selection processing unit 85 sets the current lateral velocity error to the same time maximum value.

Moreover, in a case where it is determined in step S209 that the lateral velocity error is not larger than the maximum value at the same time, the process of step S210 is skipped.

In step S211, the optimal initial azimuth selection processing unit 85 determines whether or not the instance ID is smaller than 359.

In a case where it is determined in step S211 that the instance ID is smaller than 359, the process proceeds to step S212.

In step S212, the optimal initial azimuth selection processing unit 85 increments the count value for counting the instance ID by 1, the process returns to step S203, and the subsequent processing is repeated.

That is, the lateral velocity error is obtained for all the instances, and the processing of steps S203 to S212 is repeated until the magnitude relationship with the same time minimum value is compared.

Then, in a case where it is determined in step S211 that the instance ID is not smaller than 360, the lateral velocity error is obtained for all the instances, and the magnitude relationship with the same time minimum value is compared, the process proceeds to step S213.

In step S213, the optimal initial azimuth selection processing unit 85 determines whether or not a difference between the same time maximum value and the same time minimum value is larger than a predetermined value (for example, 0.3 m/s). That is, when the difference between the same time maximum value and the same time minimum value is not larger than the predetermined value, there is no difference between the optimal initial azimuth and other initial azimuths. Therefore, whether or not the initial azimuth specified by the instance of the current temporary optimal ID is a sufficiently appropriate initial azimuth is determined by whether or not the difference between the same time maximum value and the same time minimum value is larger than the predetermined value.

In a case where it is determined in step S213 that the difference between the same time maximum value and the same time minimum value is larger than the predetermined value (for example, 0.3 m/s) and the initial azimuth set for the instance of the current temporary optimal ID is sufficiently appropriate, the process proceeds to step S214.

In step S214, the optimal initial azimuth selection processing unit 85 regards the instance ID set as the temporary optimal ID as the optimal ID, and ends the process.

Note that, in a case where it is determined in step S213 that the difference between the same time maximum value and the same time minimum value is not larger than the predetermined value (for example, 0.3 m/s), since there is no large difference between the lateral velocity error of the instance ID set as the temporary optimal ID and the other lateral velocity errors, it cannot be regarded as a sufficiently optimal instance, and thus the process of step S214 is skipped and the process ends.

Through the above processing, an instance in which the lateral velocity of the mobile object set on the basis of the non-holonomic constraint is close to substantially 0 which is the reference velocity (reference information) is searched, and the initial azimuth set in the searched instance is specified as the optimal initial azimuth.

Then, the attitude, velocity, and position corresponding to the identified initial bearing instance is then presented as the appropriate attitude, velocity, and position information with the error removed.

As a result, it is possible to estimate the azimuth of the mobile object that is moving by an inertial measurement unit (IMU) alone with high accuracy.

Note that specifying the optimal initial azimuth is equivalent to specifying the self-rotation component corresponding to the initial azimuth, and thus, it can be considered that the self-rotation component corresponding to the initial azimuth set to the instance in which the lateral velocity of the mobile object is close to 0 which is the reference velocity is specified.

Furthermore, in the above, an example has been described in which the instance in which the optimal initial azimuth is set is searched using the constraint condition that the lateral velocity in the mobile object 11 including the drive wheel becomes 0 as the non-holonomic constraint condition. However, as long as the non-holonomic constraint condition that the velocity becomes constant in a predetermined direction with respect to the mobile object 11 on which the information processing apparatus 31 including the inertial measurement unit 52 is mounted is set, another constraint condition may be used.

For example, in a case where the mobile object 11 moves at a constant predetermined velocity with respect to the traveling direction, an initial azimuth in which a traveling direction velocity error that is a difference between a velocity in the traveling direction set for each initial azimuth and a constant predetermined velocity that is a reference velocity is minimized may be searched for.

Furthermore, the initial azimuth may be searched using both the lateral velocity of the mobile object 11 and the velocity in the traveling direction as constraint conditions. That is, a non-holonomic constraint condition may be set for a plurality of directions with respect to the velocity.

Moreover, for example, in a state where the inertial measurement unit 52 is provided and the user holds the information processing apparatus 31, when using an escalator, a moving walkway, or the like that moves at a predetermined velocity in a predetermined direction, the moving velocity of the escalator or the moving walkway may be set to the reference velocity, and an instance having a velocity close to the reference velocity may be searched, so that the initial azimuth set for the searched instance is specified.

Furthermore, for example, in a state where the inertial measurement unit 52 is provided and the user holds the information processing apparatus 31, the walking velocity or the running velocity may be set to the reference velocity when walking or running in a predetermined direction at a predetermined velocity, and an instance having a velocity close to the reference velocity may be searched, so that the initial azimuth set in the searched instance is specified.

Moreover, as the velocity, not only the linear velocity but also an initial azimuth in which an error is minimized may be searched for by a non-holonomic constraint condition in which a velocity in a state in which the mobile object 11 including the inertial measurement unit 52 and mounting the information processing apparatus 31 is turning at a constant velocity, that is, a state in which the mobile object turns at a constant turning velocity (= centripetal acceleration/yaw acceleration) or a state in which the mobile object turns a curve at an equiangular velocity motion is set as a reference velocity.

Furthermore, in the above description, an example has been described in which the constraint condition based on the velocity of the mobile object 11 on which the information processing apparatus 31 including the inertial measurement unit 52 is mounted is set. However, the constraint condition based on acceleration may be used. For example, an optimal initial azimuth may be searched for using a non-holonomic constraint condition that the acceleration of the mobile object in the lateral direction or the traveling direction is a predetermined value.

Moreover, as the non-holonomic constraint condition, both the velocity and the acceleration may be used in combination to search for the optimal initial azimuth.

Furthermore, strict bias estimation separated from rotation may be dynamically performed, and an optimal initial azimuth search may be realized in a natural motion without performing a special operation. For example, a search for an initial azimuth direction in conjunction with bias temperature compensation may be realized by holding a temperature and a set temperature that greatly affect the accuracy of the inertial measurement unit 52.

That is, when the elapsed time is short and the temperature change is small on the basis of the temperature of the inertial measurement unit 52 and the elapsed time until the next time, the held estimation result is used for the next time, whereby the estimation of the initial azimuth can be quickly realized.

Furthermore, in a case where the stationary time in the initial state measurement process is short and the accuracy is insufficient, the initial azimuth search process described above may be repeatedly executed while moving to improve the initial azimuth search accuracy with the lapse of time.

Moreover, the constraint condition may be set on the basis of not only the velocity and the acceleration but also the combination of the acceleration sensor and the gyro sensor, the angular velocity, and the attitude.

For example, the constraint condition may be set using a filter value of an acceleration sensor constituting a gyro sensor and a complementary filter.

Furthermore, the constraint condition may be set on the basis of a difference between the roll and pitch estimated on the basis of the gravity obtained by the acceleration sensor and the attitude estimated on the basis of the gyro sensor, or the like.

Furthermore, the initial azimuth may be specified not only from direct constraint conditions by physical quantities such as velocity, acceleration, and angular velocity, but also from evaluation using indirect constraint conditions.

For example, at the time of searching for the optimal initial azimuth, the distance from the origin may be set as the reference information on the basis of the position information, and when returning to the same place, the optimal initial azimuth may be searched on the basis of a constraint condition that the distance to be the reference information at that time is 0.

Moreover, in a case where the motion capture function is realized in a state where the above-described information processing apparatus 31 is held by the user, the performer as the user moves, for example, only within a radius of several meters. Therefore, an optimal initial azimuth may be searched for by searching for an initial azimuth with accuracy caused within a radius of several meters.

Furthermore, in a robot or the like traveling on the ground, since the variation amount of the attitude obtained from the gyro sensor becomes the rotation component by ensuring the constant roll pitch attitude, the initial azimuth in which the variation amount of the attitude is minimized may be searched as the optimal initial azimuth.

<<3. Modification example>>

Although the example of selecting the initial azimuth of the instance in which the lateral velocity is minimized has been described above, the initial azimuth of the instance in which the variation is minimized may be selected from the variation degree between the minimum value and the maximum value in the vicinity of the reference velocity of the lateral velocity for each instance.

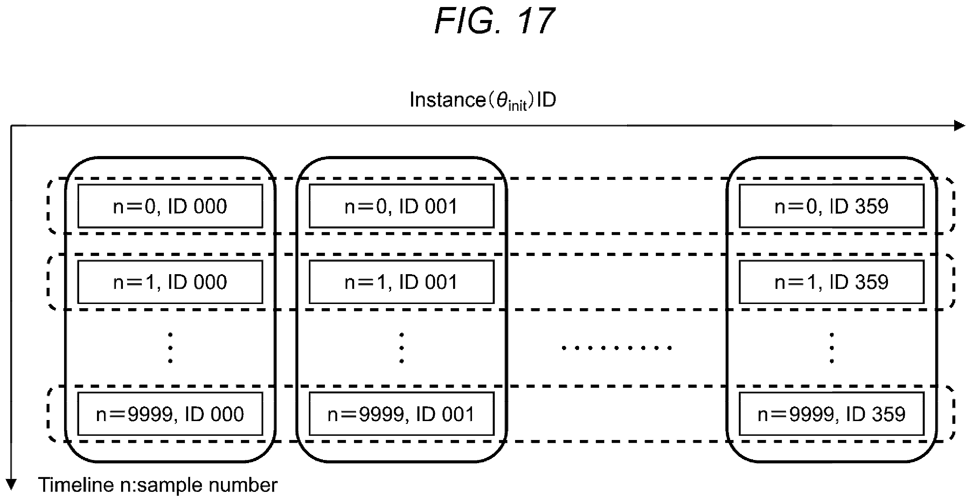

For example, as illustrated in Fig. 17, the instance IDs 000 to 359 are sequentially set in the horizontal direction in the drawing, and the lateral velocity is stored so that the sampling number n in time series is set to 0 to 9999 in the vertical direction in the drawing for each instance ID.

Note that, in Fig. 17, it is expressed that each square frame in which the sampling number and the instance ID are described stores the lateral velocity, the lateral velocities of the same instance ID are surrounded by the same solid line frame, and the lateral velocities sampled at the same timing are surrounded by the same dotted line frame.

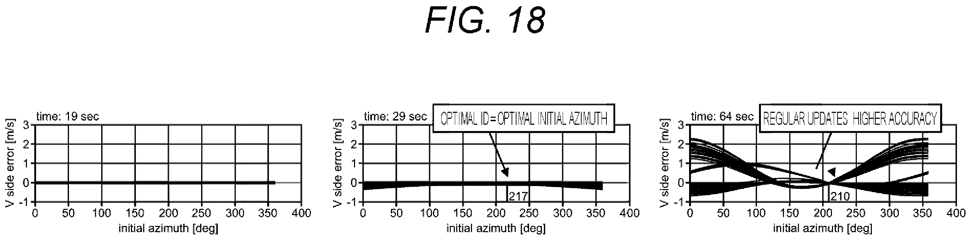

In each of the left part, the central part, and the right part of Fig. 18, the horizontal velocity sampled at the same timing surrounded by a dotted line is expressed by a graph of the horizontal velocity with the horizontal axis representing the initial azimuth corresponding to the instance ID, and the vertical axis representing the horizontal velocity, and a graph formed by plotting a plurality of timings, that is, a plurality of sampling results is written in an overlapping manner with the lapse of time.

Note that Fig. 18 illustrates an example in which graphs are superimposed at elapsed times of 19 seconds (time: 19 sec), 29 seconds (time: 29 sec), and 64 seconds (time: 64 sec) from the left.

That is, as illustrated in Fig. 18, a state of a change when the graph is gradually superimposed and displayed when the number of samples increases from a state where the number of samples is small in order from the left to the right is illustrated.

That is, when there is an error in the initial azimuth, the error of the velocity according to the deviation of the initial azimuth is superimposed with the lapse of time, and thus, as illustrated in the left part of Fig. 18, in a state where the number of samplings is small, there is no variation in all the graphs, and the state is almost 0.

However, for example, in the state illustrated in the central portion of Fig. 18 with the lapse of time, the deviation of the initial azimuth is superimposed and appears as the error of the velocity. Therefore, in the vicinity of 217 degrees of the initial azimuth, which is considered to be appropriately set, the initial azimuth remains substantially 0, but the variation increases as the initial azimuth is other than the initial azimuth.

Moreover, as illustrated in the right part of Fig. 18, when the initial azimuth is 210 degrees, which seems to be appropriately set, the initial azimuth remains 0, which is a value near the reference velocity, but as the initial azimuth is other than the initial azimuth, a larger variation occurs.

That is, since the variation according to the degree of deviation of the initial azimuth increases with the lapse of time, the difference from the variation in the appropriate initial azimuth is large, and it appears to be clearly distinguishable.

Therefore, the convergence occurs such that the velocity varies in the vicinity of 0, which is the reference velocity, with the lapse of time, so that the appropriate initial azimuth can be estimated with higher accuracy.

<Modification example of optimal initial azimuth selection process>

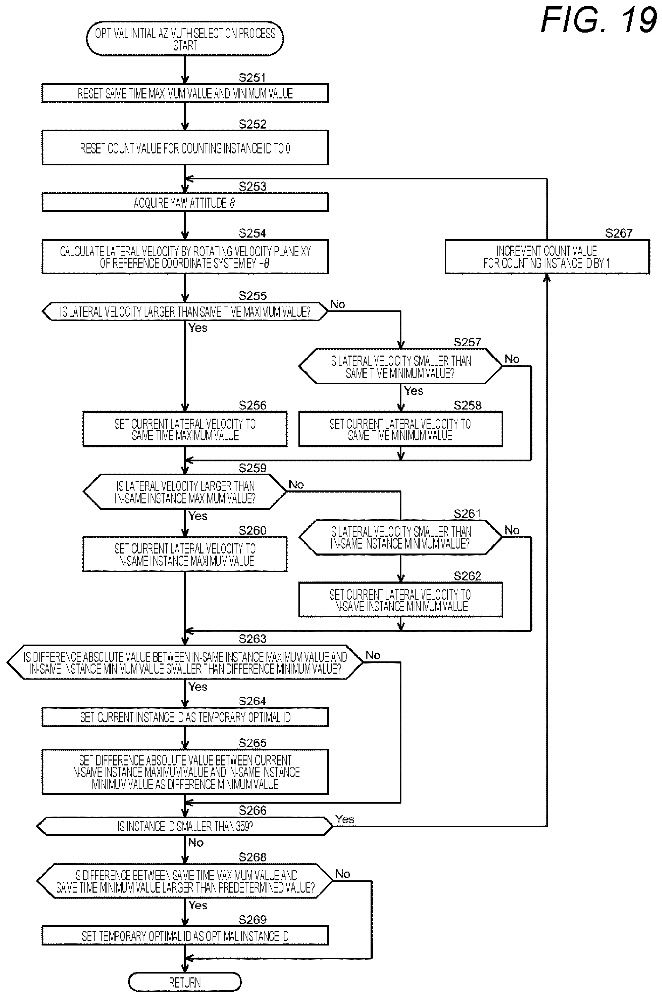

Next, a modification example of the optimal initial azimuth selection process by the optimal initial azimuth selection processing unit 85 will be described with reference to a flowchart of Fig. 19.

In step S251, the optimal initial azimuth selection processing unit 85 resets the same time maximum value and the same time minimum value to 0.

In step S252, the optimal initial azimuth selection processing unit 85 resets the count value for counting the instance ID to 0.

In step S253, the optimal initial azimuth selection processing unit 85 acquires the yaw attitude $\theta$ among the attitude information.

In step S254, the optimal initial azimuth selection processing unit 85 calculates the lateral velocity by rotating the velocity of the reference coordinate system of the current instance ID by $-\theta$ in the yaw direction on the velocity plane XY.

In step S255, the optimal initial azimuth selection processing unit 85 determines whether or not the lateral velocity of the current instance ID is larger than the same time maximum value.

In a case where it is determined in step S255 that the lateral velocity of the current instance ID is larger than the same time maximum value, the process proceeds to step S256.

In step S256, the optimal initial azimuth selection processing unit 85 sets the lateral velocity of the current instance ID to the same time maximum value.

On the other hand, in a case where it is determined in step S255 that the lateral velocity of the current instance ID is not larger than the same time maximum value, the process proceeds to step S257.

In step S257, the optimal initial azimuth selection processing unit 85 determines whether or not the lateral velocity of the current instance ID is smaller than the same time minimum value.

In a case where it is determined in step S257 that the lateral velocity of the current instance ID is smaller than the same time minimum value, the process proceeds to step S210.

In step S258, the optimal initial azimuth selection processing unit 85 sets the lateral velocity of the current instance ID to the same time minimum value.

Moreover, in step S257, in a case where it is determined that the lateral velocity of the current instance ID is not smaller than the same time minimum value, the processing of step S258 is skipped.

In step S259, the optimal initial azimuth selection processing unit 85 determines whether or not the lateral velocity of the current instance ID is larger than an in-same instance maximum value that is the maximum value within the same instance.

In a case where it is determined in step S259 that the lateral velocity of the current instance ID is larger than the in-same instance maximum value, the process proceeds to step S260.

In step S260, the optimal initial azimuth selection processing unit 85 sets the lateral velocity of the current instance ID to the in-same instance maximum value.

On the other hand, in a case where it is determined in step S259 that the lateral velocity of the current instance ID is not larger than the in-same instance maximum value, the process proceeds to step S261.

In step S261, the optimal initial azimuth selection processing unit 85 determines whether or not the lateral velocity of the current instance ID is smaller than an in-same instance minimum value that is the minimum value within the same instance.

In a case where it is determined in step S261 that the lateral velocity of the current instance ID is smaller than the in-same instance minimum value that is the minimum value within the same instance, the process proceeds to step S262.

In step S262, the optimal initial azimuth selection processing unit 85 sets the lateral velocity of the current instance ID to the in-same instance minimum value.

Moreover, in a case where it is determined in step S261 that the lateral velocity of the current instance ID is not smaller than the in-same instance minimum value, the processing in step S262 is skipped.

In step S263, the optimal initial azimuth selection processing unit 85 determines whether or not the difference absolute value between the in-same instance maximum value and the in-same instance minimum value of the current instance ID is smaller than a difference minimum value.

In a case where it is determined in step S263 that the difference between the in-same instance maximum value and the in-same instance minimum value is smaller than the difference minimum value, the process proceeds to step S264.

In step S264, the optimal initial azimuth selection processing unit 85 sets the current instance ID as the temporary optimal ID.

In step S265, the optimal initial azimuth selection processing unit 85 sets the difference absolute value between the in-same instance maximum value and the in-same instance minimum value of the current instance ID as the difference minimum value.

In step S266, the optimal initial azimuth selection processing unit 85 determines whether or not the instance ID is smaller than 359.

In a case where it is determined in step S266 that the instance ID is smaller than 359, the process proceeds to step S267.

In step S267, the optimal initial azimuth selection processing unit 85 increments the instance ID by 1, the process returns to step S253, and the subsequent processes are repeated.

That is, the lateral velocity is obtained for all the instances, and the processing of steps S253 to S267 is repeated until the magnitude relationship between the difference absolute value between the in-same instance maximum value and the in-same instance minimum value, and the difference minimum value is compared.

Then, in a case where it is determined in step S266 that the instance ID is not smaller than 359, the lateral velocities are obtained for all the instances, and the magnitude relationship between the difference absolute value between the in-same instance maximum value and the in-same instance minimum value, and the difference minimum value is compared, the process proceeds to step S268.

In step S268, the optimal initial azimuth selection processing unit 85 determines whether or not the difference between the same time maximum value and the same time minimum value is larger than a predetermined value (for example, 0.3 m/s).

In a case where it is determined in step S268 that the difference between the same time maximum value and the same time minimum value is larger than the predetermined value (for example, 0.3 m/s), the process proceeds to step S269.

In step S269, the optimal initial azimuth selection processing unit 85 regards the instance ID set as the temporary optimal ID as the optimal ID, and ends the process.

Note that, in step S268, in a case where it is determined that the difference between the same time maximum value and the same time minimum value is not larger than the predetermined value (for example, 0.3 m/s), since there is no difference between the lateral velocity of the instance ID set as the temporary optimal ID and the other lateral velocities, it cannot be regarded as the optimal instance, and thus the process of step S269 is skipped and the process ends.

Through the above processing, it is possible to select the initial azimuth of the instance with the minimum variation as the optimal initial azimuth from the degree of variation between the minimum value and the maximum value for each instance.

Furthermore, since the difference absolute value between the in-same instance minimum value and the in-same instance maximum value varies greatly depending on the degree of deviation of the initial azimuth with the lapse of time, the difference from the variation in the appropriate initial azimuth is large, and it seems to be clearly distinguished. Therefore, it is possible to estimate the appropriate initial azimuth with higher accuracy as time passes.

Note that not only the velocity but also the acceleration or the angular velocity may be used in the case of searching for an appropriate initial azimuth due to the variation according to the degree of deviation of the initial azimuth.

<<4. Example of execution by software>>

Incidentally, the series of processing described above can be executed by hardware, but can also be executed by software. In a case where the series of processing is executed by software, a program forming the software is installed from a recording medium into, for example, a computer built into dedicated hardware or a general-purpose computer that is capable of executing various functions by installing various programs, or the like.

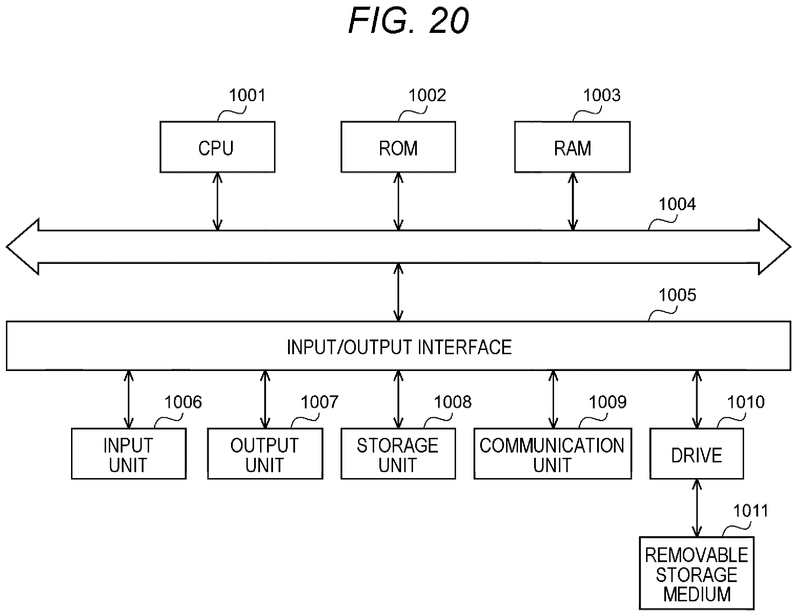

Fig. 20 illustrates a configuration example of a general-purpose computer. This computer includes a central processing unit (CPU) 1001. An input/output interface 1005 is connected to the CPU 1001 via a bus 1004. A read only memory (ROM) 1002 and a random access memory (RAM) 1003 are connected to the bus 1004.

The input/output interface 1005 is connected to an input unit 1006 including an input device such as a keyboard or a mouse with which the user inputs an operation command, an output unit 1007 that outputs a processing operation screen and an image of a processing result to a display device, a storage unit 1008 including a hard disk drive or the like that stores programs and various types of data, and a communication unit 1009 that includes a local area network (LAN) adapter or the like and executes communication processing via a network represented by the Internet. Furthermore, a drive 1010 that reads and writes data from and to a removable storage medium 1011 such as a magnetic disk (including flexible disk), an optical disc (including compact disc-read only memory (CD-ROM) and digital versatile disc (DVD)), a magneto-optical disk (including mini disc (MD)), or a semiconductor memory is connected.

The CPU 1001 performs various types of processing according to a program stored in the ROM 1002 or a program read from the removable storage medium 1011 such as a magnetic disk, an optical disc, a magneto-optical disk, or a semiconductor memory, installed in the storage unit 1008, and loaded from the storage unit 1008 into the RAM 1003. Furthermore, the RAM 1003 also appropriately stores data necessary for the CPU 1001 to perform various types of processing, and the like.

In the computer configured as described above, for example, the CPU 1001 loads the program stored in the storage unit 1008 into the RAM 1003 via the input/output interface 1005 and the bus 1004 and executes the program, thereby performing the above-described series of processing.

The program executed by the computer (CPU 1001) can be provided by being recorded in the removable storage medium 1011 as a package medium or the like, for example. Furthermore, the program can be provided via a wired or wireless transmission medium such as a local area network, the Internet, or digital satellite broadcasting.

In the computer, the program can be installed in the storage unit 1008 via the input/output interface 1005 by attaching the removable storage medium 1011 to the drive 1010. Furthermore, the program may be received by the communication unit 1009 by means of the wired or wireless transmission medium to be installed on the storage unit 1008. Further, the program can be installed in the ROM 1002 or the storage unit 1008 in advance.

Note that the program executed by the computer may be a program that performs processing in a time series according to an order described in the present specification, or may be a program that performs processing in parallel or at necessary timing such as when a call is made.

Note that the CPU 1001 in Fig. 20 implements the function of the control unit 51 in Fig. 9.

Furthermore, in the present specification, a system means an assembly of a plurality of configuration elements (devices, modules (parts), and the like), and it does not matter whether or not all the configuration elements are in the same housing. Therefore, a plurality of devices housed in separate housings and connected to each other via a network and one device in which a plurality of modules is housed in one housing are both systems.

Note that embodiments of the present disclosure are not limited to the embodiment described above, and various modifications may be made without departing from the scope of the present disclosure.

For example, the present disclosure may have a configuration of cloud computing in which one function is shared by a plurality of devices via a network and processing is performed in cooperation.

Furthermore, each step described in the flowchart described above can be performed by one device or can be shared and performed by a plurality of devices.

Moreover, in a case where a plurality of pieces of processing is included in one step, the plurality of pieces of processing included in the one step can be executed by one device or executed by a plurality of devices in a shared manner.

Note that the present disclosure can also have the following configurations.

<1> An information processing apparatus including:

a reference coordinate system calculation unit that calculates at least one of an acceleration and a velocity of a mobile object in a reference coordinate system on the basis of inertial navigation calculation;
a mobile object coordinate system calculation unit that calculates at least one of an acceleration and a velocity of a mobile object coordinate system that is a coordinate system of the mobile object from at least one of the acceleration and the velocity of the reference coordinate system; and
a specification unit that specifies a rotation component or an absolute azimuth on the basis of at least one of the acceleration and the velocity of the mobile object coordinate system and reference information of at least one of an acceleration and a velocity serving as a non-holonomic constraint condition that constrains a degree of freedom of at least one of six axes related to an attitude and a velocity of the mobile object.

<2> The information processing apparatus according to <1>, in which

the non-holonomic constraint condition includes a constraint condition in which at least one of a velocity and an acceleration in a predetermined direction in the mobile object coordinate system becomes a predetermined value, and
the specification unit specifies the rotation component or the absolute azimuth on the basis of the reference information of at least one of the velocity and the acceleration satisfying the non-holonomic constraint condition.

<3> The information processing apparatus according to <2>, in which
the non-holonomic constraint condition includes a constraint condition in which at least one of a velocity and an acceleration in at least one of a forward direction of the mobile object and a lateral direction perpendicular to the forward direction in the mobile object coordinate system becomes a predetermined value.

<4> The information processing apparatus according to <1>, in which

the mobile object includes a drive wheel,
the non-holonomic constraint condition includes a constraint condition in which a velocity in a lateral direction perpendicular to a traveling direction in the mobile object coordinate system, the lateral direction being a rotation axis direction of the drive wheel, becomes 0, and

the specification unit specifies the rotation component or the absolute azimuth on the basis of the reference information that the velocity in the lateral direction satisfying the non-holonomic constraint condition becomes 0.

<5> The information processing apparatus according to <4>, in which

the reference coordinate system calculation unit calculates an attitude of the reference coordinate system by integrating an angular velocity of the mobile object coordinate system and setting an initial azimuth in an integration result of the angular velocity, converts an acceleration of the mobile object coordinate system into an acceleration of the reference coordinate system on the basis of the attitude of the reference coordinate system, and integrates the acceleration of the reference coordinate system to calculate a velocity of the reference coordinate system,

the reference coordinate system calculation unit calculates the velocity of the reference coordinate system for each of candidate azimuths that are candidates for a plurality of the initial azimuths set in a range of 0 degrees to 360 degrees,

the mobile object coordinate system calculation unit converts the velocity of the reference coordinate system for each of the candidate azimuths into a velocity of the mobile object coordinate system to calculate the velocity of the mobile object coordinate system, and

the specification unit specifies, from among the candidate azimuths, a candidate azimuth in which the velocity in the lateral direction calculated from the velocity of the mobile object coordinate system satisfies the reference information, as the rotation component or the absolute azimuth.

<6> The information processing apparatus according to <5>, in which
the specification unit specifies, from among the candidate azimuths, a candidate azimuth in which a difference between the velocity in the lateral direction calculated from the velocity of the mobile object coordinate system and the velocity serving as the reference information is minimized, as the rotation component or the absolute azimuth.
<7> The information processing apparatus according to <6>, in which
the specification unit calculates a velocity difference that is a difference between the velocity in the lateral direction calculated from the velocity of the mobile object coordinate system and the velocity serving as the reference information, as well as a difference maximum value that is a maximum value of the velocity difference and a difference minimum value that is a minimum value of the velocity difference; and specifies, from among the candidate azimuths, a candidate azimuth in which the velocity difference is minimum as the rotation component or the absolute azimuth when a difference between the difference maximum value and the difference minimum value is larger than a predetermined value.
<8> The information processing apparatus according to <5>, in which
the mobile object coordinate system calculation unit converts the velocity of the reference coordinate system for each of the candidate azimuths into a velocity of the mobile object coordinate system on the basis of a yaw attitude of the mobile object, and calculates the velocity in the lateral direction on the basis of the velocity of the mobile object coordinate system.
<9> The information processing apparatus according to <8>, further including:

an angular velocity detection unit that detects the angular velocity of the mobile object;
an acceleration detection unit that detects the acceleration of the mobile object; and
an angular velocity compensation unit that calculates a compensation value for the angular velocity by subtracting the rotation component based on a current attitude for each of the candidate azimuths from the angular velocity detected by the angular velocity detection unit,
in which the reference coordinate system calculation unit integrates the compensation value for the angular velocity and calculates an attitude of the reference coordinate system for each of the candidate azimuths.

<10> The information processing apparatus according to <9>, further including

a bias estimation unit that estimates a bias value from a difference between an angular velocity average value that is an average value of angular velocities detected by the angular velocity detection unit and an initial attitude based on gravity for each of the candidate azimuths,
in which the angular velocity compensation unit calculates a compensation value for the angular velocity by subtracting the bias value together with the rotation component based on a current attitude for each of the candidate azimuths from the angular velocity in the angular velocity detection unit.

<11> The information processing apparatus according to <5>, in which
the specification unit specifies, for each of the candidate azimuths, a candidate azimuth in which the velocity of the lateral direction calculated from the velocity of the mobile object coordinate system has a minimum variation in a vicinity of the velocity serving as the reference information, as the rotation component or the absolute azimuth.

<12> The information processing apparatus according to <11>, in which
the specification unit regards, as the variation, a difference between a maximum value and a minimum value of the velocity in the lateral direction repeatedly calculated in time series from the velocity of the mobile object coordinate system for each of the candidate azimuths, and specifies, as the rotation component or the absolute azimuth, a candidate azimuth in which the variation in a vicinity of the velocity serving as the reference information is minimized.

<13> The information processing apparatus according to <12>, in which
the specification unit calculates a velocity difference that is a difference between the velocity in the lateral direction calculated from the velocity of the mobile object coordinate system and the velocity serving as the reference information, as well as a difference maximum value that is a maximum value of the velocity difference and a difference minimum value that is a minimum value of the velocity difference for each of the candidate azimuths; and specifies a candidate azimuth in which the variation is minimum as the rotation component or the absolute azimuth when a difference between the difference maximum value and the difference minimum value is larger than a predetermined value.

<14> An information processing method including the steps of:

calculating at least one of an acceleration and a velocity of a mobile object in a reference coordinate system on the basis of inertial navigation calculation;
calculating at least one of an acceleration and a velocity of a mobile object coordinate system that is a coordinate system of the mobile object from at least one of the acceleration and the velocity of the reference coordinate system; and
specifying a rotation component or an absolute azimuth on the basis of at least one of the acceleration and the velocity of the mobile object coordinate system and reference information of at least one of an acceleration and a velocity serving as a non-holonomic constraint condition that constrains a degree of freedom of at least one of six axes related to an attitude and a velocity of the mobile object.

<15> A program for causing a computer to function as:

a reference coordinate system calculation unit that calculates at least one of an acceleration and a velocity of a mobile object in a reference coordinate system on the basis of inertial navigation calculation;
a mobile object coordinate system calculation unit that calculates at least one of an acceleration and a velocity of a mobile object coordinate system that is a coordinate system of the mobile object from at least one of the acceleration and the velocity of the reference coordinate system; and
a specification unit that specifies a rotation component or an absolute azimuth on the basis of at least one of the acceleration and the velocity of the mobile object coordinate system and reference information of at least one of an acceleration and a velocity serving as a non-holonomic constraint condition that constrains a degree of freedom of at least one of six axes related to an attitude and a velocity of the mobile object.

REFERENCE SIGNS LIST

| 11 | Mobile object |
| 31 | Information processing apparatus |
| 32, 32-RL, 32-FR, 32-RL, 32-RR | Drive wheel |
| 51 | Control unit |
| 52 | Inertial measurement unit |
| 53 | Latitude acquisition unit |
| 54 | Communication unit |
| 55 | Output unit |
| 56 | Storage unit |
| 71 | Azimuth specification unit |
| 81 | Initial state measurement processing unit |
| 82 | Initial state measured flag |
| 83 | Rotation compensation processing unit |

| | |
|---|---|
| 84 | Inertial navigation calculation processing unit |
| 85 | Optimal initial azimuth selection processing unit |
| 91 | Three-axis gyro sensor |
| 92 | Three-axis acceleration sensor |
| 131 | Attitude calculation unit |
| 132 | Reference coordinate conversion unit |
| 133 | Velocity calculation unit |
| 134 | Position calculation unit |

**Claims**

1. An information processing apparatus comprising:

   a reference coordinate system calculation unit that calculates at least one of an acceleration and a velocity of a mobile object in a reference coordinate system on a basis of inertial navigation calculation;
   a mobile object coordinate system calculation unit that calculates at least one of an acceleration and a velocity of a mobile object coordinate system that is a coordinate system of the mobile object from at least one of the acceleration and the velocity of the reference coordinate system; and
   a specification unit that specifies a rotation component or an absolute azimuth on a basis of at least one of the acceleration and the velocity of the mobile object coordinate system and reference information of at least one of an acceleration and a velocity serving as a non-holonomic constraint condition that constrains a degree of freedom of at least one of six axes related to an attitude and a velocity of the mobile object.

2. The information processing apparatus according to claim 1, wherein

   the non-holonomic constraint condition includes a constraint condition in which at least one of a velocity and an acceleration in a predetermined direction in the mobile object coordinate system becomes a predetermined value, and
   the specification unit specifies the rotation component or the absolute azimuth on a basis of the reference information of at least one of the velocity and the acceleration satisfying the non-holonomic constraint condition.

3. The information processing apparatus according to claim 2, wherein
   the non-holonomic constraint condition includes a constraint condition in which at least one of a velocity and an acceleration in at least one of a forward direction of the mobile object and a lateral direction perpendicular to the forward direction in the mobile object coordinate system becomes a predetermined value.

4. The information processing apparatus according to claim 1, wherein

   the mobile object includes a drive wheel,
   the non-holonomic constraint condition includes a constraint condition in which a velocity in a lateral direction perpendicular to a traveling direction in the mobile object coordinate system, the lateral direction being a rotation axis direction of the drive wheel, becomes 0, and
   the specification unit specifies the rotation component or the absolute azimuth on a basis of the reference information that the velocity in the lateral direction satisfying the non-holonomic constraint condition becomes 0.

5. The information processing apparatus according to claim 4, wherein

   the reference coordinate system calculation unit calculates an attitude of the reference coordinate system by integrating an angular velocity of the mobile object coordinate system and setting an initial azimuth in an integration result of the angular velocity, converts an acceleration of the mobile object coordinate system into an acceleration of the reference coordinate system on a basis of the attitude of the reference coordinate system, and integrates the acceleration of the reference coordinate system to calculate a velocity of the reference coordinate system,
   the reference coordinate system calculation unit calculates the velocity of the reference coordinate system for each of candidate azimuths that are candidates for a plurality of the initial azimuths set in a range of 0 degrees to 360 degrees,
   the mobile object coordinate system calculation unit converts the velocity of the reference coordinate system for each of the candidate azimuths into a velocity of the mobile object coordinate system to calculate the velocity of the mobile object coordinate system, and

the specification unit specifies, from among the candidate azimuths, a candidate azimuth in which the velocity in the lateral direction calculated from the velocity of the mobile object coordinate system satisfies the reference information, as the rotation component or the absolute azimuth.

6. The information processing apparatus according to claim 5, wherein
the specification unit specifies, from among the candidate azimuths, a candidate azimuth in which a difference between the velocity in the lateral direction calculated from the velocity of the mobile object coordinate system and the velocity serving as the reference information is minimized, as the rotation component or the absolute azimuth.

7. The information processing apparatus according to claim 6, wherein
the specification unit calculates a velocity difference that is a difference between the velocity in the lateral direction calculated from the velocity of the mobile object coordinate system and the velocity serving as the reference information, as well as a difference maximum value that is a maximum value of the velocity difference and a difference minimum value that is a minimum value of the velocity difference; and specifies, from among the candidate azimuths, a candidate azimuth in which the velocity difference is minimum as the rotation component or the absolute azimuth when a difference between the difference maximum value and the difference minimum value is larger than a predetermined value.

8. The information processing apparatus according to claim 5, wherein
the mobile object coordinate system calculation unit converts the velocity of the reference coordinate system for each of the candidate azimuths into a velocity of the mobile object coordinate system on a basis of a yaw attitude of the mobile object, and calculates the velocity in the lateral direction on a basis of the velocity of the mobile object coordinate system.

9. The information processing apparatus according to claim 8, further comprising:

an angular velocity detection unit that detects the angular velocity of the mobile object;
an acceleration detection unit that detects the acceleration of the mobile object; and
an angular velocity compensation unit that calculates a compensation value for the angular velocity by subtracting the rotation component based on a current attitude for each of the candidate azimuths from the angular velocity detected by the angular velocity detection unit,
wherein the reference coordinate system calculation unit integrates the compensation value for the angular velocity and calculates an attitude of the reference coordinate system for each of the candidate azimuths.

10. The information processing apparatus according to claim 9, further comprising

a bias estimation unit that estimates a bias value from a difference between an angular velocity average value that is an average value of angular velocities detected by the angular velocity detection unit and an initial attitude based on gravity for each of the candidate azimuths,
wherein the angular velocity compensation unit calculates a compensation value for the angular velocity by subtracting the bias value together with the rotation component based on a current attitude for each of the candidate azimuths from the angular velocity in the angular velocity detection unit.

11. The information processing apparatus according to claim 5, wherein
the specification unit specifies, for each of the candidate azimuths, a candidate azimuth in which the velocity of the lateral direction calculated from the velocity of the mobile object coordinate system has a minimum variation in a vicinity of the velocity serving as the reference information, as the rotation component or the absolute azimuth.

12. The information processing apparatus according to claim 11, wherein
the specification unit regards, as the variation, a difference between a maximum value and a minimum value of the velocity in the lateral direction repeatedly calculated in time series from the velocity of the mobile object coordinate system for each of the candidate azimuths, and specifies, as the rotation component or the absolute azimuth, a candidate azimuth in which the variation in a vicinity of the velocity serving as the reference information is minimized.

13. The information processing apparatus according to claim 12, wherein
the specification unit calculates a velocity difference that is a difference between the velocity in the lateral direction calculated from the velocity of the mobile object coordinate system and the velocity serving as the reference information, as well as a difference maximum value that is a maximum value of the velocity difference and a difference minimum value that is a minimum value of the velocity difference for each of the candidate azimuths; and specifies a candidate azimuth in which the variation is minimum as the rotation component or the absolute azimuth when a difference between the difference maximum value and the difference minimum value is larger than a predetermined value.

14. An information processing method comprising the steps of:

calculating at least one of an acceleration and a velocity of a mobile object in a reference coordinate system on a basis of inertial navigation calculation;
calculating at least one of an acceleration and a velocity of a mobile object coordinate system that is a coordinate system of the mobile object from at least one of the acceleration and the velocity of the reference coordinate system; and
specifying a rotation component or an absolute azimuth on a basis of at least one of the acceleration and the velocity of the mobile object coordinate system and reference information of at least one of an acceleration and a velocity serving as a non-holonomic constraint condition that constrains a degree of freedom of at least one of six axes related to an attitude and a velocity of the mobile object.

15. A program for causing a computer to function as:

a reference coordinate system calculation unit that calculates at least one of an acceleration and a velocity of a mobile object in a reference coordinate system on a basis of inertial navigation calculation;
a mobile object coordinate system calculation unit that calculates at least one of an acceleration and a velocity of a mobile object coordinate system that is a coordinate system of the mobile object from at least one of the acceleration and the velocity of the reference coordinate system; and
a specification unit that specifies a rotation component or an absolute azimuth on a basis of at least one of the acceleration and the velocity of the mobile object coordinate system and reference information of at least one of an acceleration and a velocity serving as a non-holonomic constraint condition that constrains a degree of freedom of at least one of six axes related to an attitude and a velocity of the mobile object.

# FIG. 1

GYRO SENSOR VALUE $\omega$

INITIAL ATTITUDE $q_0$

INTEGRATION

ATTITUDE $q$

ACCELERATION SENSOR VALUE $a$

REFERENCE COORDINATE SYSTEM ACCELERATION $A$ (INCLUDING GRAVITY)

GRAVITY $G$

REFERENCE COORDINATE SYSTEM MOTION ACCELERATION $A_{-G}$ (REMOVING GRAVITY)

INITIAL VELOCITY

INTEGRATION

REFERENCE COORDINATE SYSTEM VELOCITY $V$

INITIAL POSITION

INTEGRATION

REFERENCE COORDINATE SYSTEM POSITION $P$

FIG. 2

EP 4 582 773 A1

# FIG. 3

## FIG. 4

EP 4 582 773 A1

## FIG. 5

EP 4 582 773 A1

## FIG. 6

EP 4 582 773 A1

## FIG. 7

# FIG. 8

INFORMATION PROCESSING APPARATUS

R ⟵ ⟶ F

INFORMATION PROCESSING APPARATUS

32-RL    32-FL

32-RR    32-FR

R ⟵ ⟶ F

*FIG. 9*

31 INFORMATION PROCESSING APPARATUS

51 CONTROL UNIT

71 AZIMUTH SPECIFICATION UNIT

81 INITIAL STATE MEASUREMENT PROCESSING UNIT

82 INITIAL STATE MEASURED FLAG

83 ROTATION COMPENSATION PROCESSING UNIT

84 INERTIAL NAVIGATION CALCULATION PROCESSING UNIT

85 OPTIMAL INITIAL AZIMUTH SELECTION PROCESSING UNIT

52 INERTIAL MEASUREMENT UNIT

91 THREE-AXIS GYRO SENSOR

92 THREE-AXIS ACCELERATION SENSOR

53 LATITUDE ACQUISITION UNIT

54 COMMUNICATION UNIT

55 OUTPUT UNIT

56 STORAGE UNIT

## FIG. 10

ANGULAR VELOCITY →

ATTITUDE CALCULATION UNIT (131)

ACCELERATION →

REFERENCE COORDINATE CONVERSION UNIT (132)

VELOCITY CALCULATION UNIT (133)

POSITION CALCULATION UNIT (134)

→ ATTITUDE

→ POSITION

→ VELOCITY

INERTIAL NAVIGATION CALCULATION PROCESSING UNIT (84)

EP 4 582 773 A1

*FIG. 11*

```
        ┌─────────────────────────────────┐
        │   AZIMUTH SPECIFICATION PROCESS  │
        │              START               │
        └─────────────────────────────────┘
                        │
                        ▼           S101
        ┌─────────────────────────────────┐
        │       GENERATE 360 INSTANCES     │
        └─────────────────────────────────┘
                        │
                        ▼           S102
        ┌─────────────────────────────────┐
        │ SET INITIAL AZIMUTH θinit IN     │
        │ INCREMENTS OF 1 DEGREE FOR EACH  │
        │ OF INSTANCES                     │
        └─────────────────────────────────┘
                        │
                        ▼           S103
        ┌─────────────────────────────────┐
        │ SET COMMON LATITUDE FOR EACH     │
        │ INSTANCE                         │
        └─────────────────────────────────┘
                        │
                        ▼           S104
        ┌─────────────────────────────────┐
        │ ACQUIRE ANGULAR VELOCITY AND     │
        │ ACCELERATION, AND ADD TIME STAMP │
        └─────────────────────────────────┘
                        │
                        ▼           S105
             ╱ HAS INITIAL STATE ╲      No
            ╱  MEASUREMENT BEEN    ╲─────────┐
            ╲  COMPLETED?          ╱         │
             ╲                    ╱          │
                   │ Yes                     ▼    S106
                   ▼       S107      ┌──────────────────┐
        ┌─────────────────────┐      │  INITIAL STATE   │
        │ ROTATION            │      │  MEASUREMENT     │
        │ COMPENSATION PROCESS│      │  PROCESS         │
        └─────────────────────┘      └──────────────────┘
                   │
                   ▼       S108
        ┌─────────────────────┐
        │ INERTIAL NAVIGATION │
        │ CALCULATION PROCESS │
        └─────────────────────┘
                   │
                   ▼       S109
        ┌─────────────────────┐
        │ OPTIMAL INITIAL     │
        │ AZIMUTH SELECTION   │
        │ PROCESS             │
        └─────────────────────┘
                   │
                   ▼       S110
        ┌─────────────────────┐
        │ DISPLAY LATEST      │
        │ AZIMUTH HELD BY     │
        │ INSTANCE OF OPTIMAL │
        │ INITIAL AZIMUTH     │
        └─────────────────────┘
                   │
                   ▼       S111
             ╱  END?  ╲       No
            ╱          ╲───────────┐
            ╲          ╱
                │ Yes
                ▼
        ┌─────────────┐
        │    END      │
        └─────────────┘
```

## FIG. 12

```
( INITIAL STATE MEASUREMENT PROCESS
           START )
                    │
                    ▼                              S131
No ◄─────  STATIONARY?
                    │ Yes
                    ▼                              S132
         COUNT COUNT VALUE FOR STATIONARY TIME
                    │
                    ▼                              S133
              ADD ACCELERATION
                    │
                    ▼                              S134
         IS THERE GYRO BIAS ESTIMATION?  ───► No
                    │ Yes
                    ▼                              S135
              ADD ANGULAR VELOCITY
                    │
                    ▼                              S136
   IS STATIONARY TIME LONGER THAN OR EQUAL TO 10 SECONDS?  ───► No
                    │ Yes
                    ▼                              S137
            CALCULATE GRAVITY
   (= ACCELERATION ADDITION VALUE / COUNT VALUE)
                    │
                    ▼                              S138
       CALCULATE AND SET INITIAL ATTITUDE
    ON BASIS OF GRAVITY AND INITIAL AZIMUTH
                    │
                    ▼                              S139
         IS THERE GYRO BIAS ESTIMATION?  ───► No
                    │ Yes
                    ▼                              S140
     CALCULATE ANGULAR VELOCITY AVERAGE VALUE
   (= ANGULAR VELOCITY ADDITION VALUE / COUNT VALUE)
                    │
                    ▼                              S141
   CALCULATE ROTATION COMPONENT ON BASIS OF INITIAL ATTITUDE
                    │
                    ▼                              S142
            CALCULATE GYRO BIAS VALUE
   (= ANGULAR VELOCITY AVERAGE VALUE - ROTATION COMPONENT)
                    │
                    ▼                              S143
         SET INITIAL STATE MEASURED FLAG TO ON
                    │
                    ▼                              S144
         RESET ACCELERATION ADDITION VALUE,
   ANGULAR VELOCITY ADDITION VALUE, AND COUNT VALUE
                    │
                    ▼
                ( RETURN )
```

# FIG. 13

```
        ┌─────────────────────────────────┐
        │   ROTATION COMPENSATION PROCESS  │
        │              START               │
        └─────────────────────────────────┘
                        │
                        ▼                    S151
        ┌─────────────────────────────────┐
        │     CALCULATE ROTATION COMPONENT │
        │     ON BASIS OF CURRENT ATTITUDE │
        └─────────────────────────────────┘
                        │
                        ▼                    S152
        ╱─────────────────────────────────╲        No
        ⟨     IS THERE GYRO BIAS ESTIMATION? ⟩──────────────┐
        ╲─────────────────────────────────╱                │
                        │ Yes                               │
                        ▼              S153                 ▼                    S155
        ┌─────────────────────────┐      ┌──────────────────────────────────────┐
        │   READ GYRO BIAS VALUE   │      │   CALCULATE GYRO COMPENSATION VALUE   │
        └─────────────────────────┘      │ (= ANGULAR VELOCITY − ROTATION COMPONENT) │
                        │                 └──────────────────────────────────────┘
                        ▼              S154                 │
        ┌────────────────────────────────────────────┐     │
        │        CALCULATE GYRO COMPENSATION VALUE     │     │
        │ (= ANGULAR VELOCITY − ROTATION COMPONENT − GYRO BIAS VALUE) │     │
        └────────────────────────────────────────────┘     │
                        │◄──────────────────────────────────┘
                        ▼
        ┌─────────────────────────┐
        │          RETURN          │
        └─────────────────────────┘
```

# FIG. 14

INERTIAL NAVIGATION CALCULATION PROCESS START

S171
CALCULATE ONE SAMPLE TIME INTERVAL
(= CURRENT TIME STAMP - TIME STAMP ONE SAMPLE BEFORE)

S172
UPDATE ATTITUDE

S173
CONVERT COORDINATE SYSTEM OF ACCELERATION INTO
REFERENCE COORDINATE SYSTEM ON BASIS OF ATTITUDE

S174
TIME-INTEGRATE ACCELERATION OF REFERENCE COORDINATE SYSTEM TO
CALCULATE VELOCITY OF REFERENCE COORDINATE SYSTEM

S175
TIME-INTEGRATE VELOCITY OF REFERENCE COORDINATE SYSTEM
TO CALCULATE POSITION OF REFERENCE COORDINATE SYSTEM

S176
HOLD ATTITUDE, AND VELOCITY AND POSITION OF
REFERENCE COORDINATE SYSTEM AT CURRENT TIME

S177
HOLD CURRENT TIME STAMP AS TIME STAMP ONE SAMPLE BEFORE

RETURN

*FIG. 15*

```
        ╭─────────────────────────────────────╮
        │  OPTIMAL INITIAL AZIMUTH SELECTION   │
        │           PROCESS START              │
        ╰─────────────────────────────────────╯
                        │
                        ▼              S201
        ┌─────────────────────────────────────────────┐
        │ RESET SAME TIME MAXIMUM VALUE AND MINIMUM VALUE│
        └─────────────────────────────────────────────┘
                        │
                        ▼              S202
        ┌─────────────────────────────────────────────┐
        │ RESET COUNT VALUE FOR COUNTING INSTANCE ID TO 0│
        └─────────────────────────────────────────────┘
                        │
                        ▼              S203
        ┌─────────────────────────────────────────────┐
        │         ACQUIRE YAW ATTITUDE θ               │
        └─────────────────────────────────────────────┘
                        │
                        ▼              S204
        ┌─────────────────────────────────────────────┐
        │ CALCULATE LATERAL VELOCITY BY ROTATING VELOCITY│
        │ PLANE XY OF REFERENCE COORDINATE SYSTEM BY −θ │
        └─────────────────────────────────────────────┘
                        │
                        ▼              S205
        ┌─────────────────────────────────────────────┐
        │ CALCULATE LATERAL VELOCITY ERROR             │
        │ (=LATERAL VELOCITY−REFERENCE VELOCITY (=0))  │
        └─────────────────────────────────────────────┘
                        │
                        ▼              S206
        ⬡ IS LATERAL VELOCITY ERROR SMALLER  ⬡ ──No──▶ ...
          THAN SAME TIME MINIMUM VALUE?
                        │Yes
                        ▼              S207
        ┌─────────────────────────────────────────────┐
        │ SET CURRENT INSTANCE ID AS TEMPORARY OPTIMAL ID│
        └─────────────────────────────────────────────┘
                        │
                        ▼              S208
        ┌─────────────────────────────────────────────┐
        │ SET CURRENT LATERAL VELOCITY ERROR TO SAME TIME MINIMUM VALUE│
        └─────────────────────────────────────────────┘
```

S209: IS LATERAL VELOCITY ERROR LARGER THAN SAME TIME MAXIMUM VALUE? —No—▶

S210: SET CURRENT LATERAL VELOCITY ERROR TO SAME TIME MAXIMUM VALUE

S212: INCREMENT COUNT VALUE FOR COUNTING INSTANCE ID BY 1

S211: IS INSTANCE ID SMALLER THAN 359? —Yes▶ (to S212)

No

S213: IS DIFFERENCE BETWEEN SAME TIME MAXIMUM VALUE AND SAME TIME MINIMUM VALUE LARGER THAN PREDETERMINED VALUE? —No▶

Yes

S214: SET TEMPORARY OPTIMAL ID AS OPTIMAL INSTANCE ID

RETURN

# FIG. 16

EP 4 582 773 A1

## FIG. 17

Instance$(\theta_{init})$ID

| n=0, ID 000 | n=0, ID 001 | | n=0, ID 359 |
| n=1, ID 000 | n=1, ID 001 | | n=1, ID 359 |
| ⋮ | ⋮ | ⋯⋯⋯ | ⋮ |
| n=9999, ID 000 | n=9999, ID 001 | | n=9999, ID 359 |

Timeline n:sample number

EP 4 582 773 A1

# FIG. 18

time: 19 sec

time: 29 sec    OPTIMAL ID = OPTIMAL INITIAL AZIMUTH

217

time: 64 sec    REGULAR UPDATES  HIGHER ACCURACY

210

*FIG. 19*

```
        ┌────────────────────────────────────┐
        │ OPTIMAL INITIAL AZIMUTH SELECTION   │
        │            PROCESS START            │
        └────────────────────────────────────┘
                         │
                      S251
        ┌────────────────────────────────────┐
        │ RESET SAME TIME MAXIMUM VALUE AND   │
        │           MINIMUM VALUE             │
        └────────────────────────────────────┘
                         │
                      S252
        ┌────────────────────────────────────┐
        │ RESET COUNT VALUE FOR COUNTING      │
        │        INSTANCE ID TO 0             │
        └────────────────────────────────────┘
                         │
                      S253
        ┌────────────────────────────────────┐
        │        ACQUIRE YAW ATTITUDE θ       │
        └────────────────────────────────────┘
                         │
                      S254
        ┌────────────────────────────────────┐
        │ CALCULATE LATERAL VELOCITY BY       │
        │ ROTATING VELOCITY PLANE XY OF       │
        │ REFERENCE COORDINATE SYSTEM BY −θ   │
        └────────────────────────────────────┘
```

S251 — RESET SAME TIME MAXIMUM VALUE AND MINIMUM VALUE

S252 — RESET COUNT VALUE FOR COUNTING INSTANCE ID TO 0

S253 — ACQUIRE YAW ATTITUDE θ

S254 — CALCULATE LATERAL VELOCITY BY ROTATING VELOCITY PLANE XY OF REFERENCE COORDINATE SYSTEM BY −θ

S255 — IS LATERAL VELOCITY LARGER THAN SAME TIME MAXIMUM VALUE? — Yes / No

S256 — SET CURRENT LATERAL VELOCITY TO SAME TIME MAXIMUM VALUE

S257 — IS LATERAL VELOCITY SMALLER THAN SAME TIME MINIMUM VALUE? — Yes / No

S258 — SET CURRENT LATERAL VELOCITY TO SAME TIME MINIMUM VALUE

S259 — IS LATERAL VELOCITY LARGER THAN IN-SAME INSTANCE MAXIMUM VALUE? — Yes / No

S260 — SET CURRENT LATERAL VELOCITY TO IN-SAME INSTANCE MAXIMUM VALUE

S261 — IS LATERAL VELOCITY SMALLER THAN IN-SAME INSTANCE MINIMUM VALUE? — No

S262 — SET CURRENT LATERAL VELOCITY TO IN-SAME INSTANCE MINIMUM VALUE

S263 — IS DIFFERENCE ABSOLUTE VALUE BETWEEN IN-SAME INSTANCE MAXIMUM VALUE AND IN-SAME INSTANCE MINIMUM VALUE SMALLER THAN DIFFERENCE MINIMUM VALUE? — Yes / No

S264 — SET CURRENT INSTANCE ID AS TEMPORARY OPTIMAL ID

S265 — SET DIFFERENCE ABSOLUTE VALUE BETWEEN CURRENT IN-SAME INSTANCE MAXIMUM VALUE AND IN-SAME INSTANCE MINIMUM VALUE AS DIFFERENCE MINIMUM VALUE

S266 — IS INSTANCE ID SMALLER THAN 359? — Yes / No

S267 — INCREMENT COUNT VALUE FOR COUNTING INSTANCE ID BY 1

S268 — IS DIFFERENCE BETWEEN SAME TIME MAXIMUM VALUE AND SAME TIME MINIMUM VALUE LARGER THAN PREDETERMINED VALUE? — Yes / No

S269 — SET TEMPORARY OPTIMAL ID AS OPTIMAL INSTANCE ID

RETURN

## FIG. 20

EP 4 582 773 A1

# INTERNATIONAL SEARCH REPORT

| | International application No. |
|---|---|
| | **PCT/JP2023/029487** |

**A. CLASSIFICATION OF SUBJECT MATTER**

*G01C 21/16*(2006.01)i; *G01C 19/38*(2006.01)i
FI: G01C21/16; G01C19/38 C

According to International Patent Classification (IPC) or to both national classification and IPC

**B. FIELDS SEARCHED**

Minimum documentation searched (classification system followed by classification symbols)

G01C17/00-21/36; G01C25/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2001-153680 A (JAPAN AVIATION ELECTRONICS INDUSTRY LTD) 08 June 2001 (2001-06-08) <br> entire text, all drawings | 1-15 |
| A | JP 2012-215547 A (FUJITSU LTD) 08 November 2012 (2012-11-08) <br> entire text, all drawings | 1-15 |
| A | JP 2014-190900 A (SEIKO EPSON CORP) 06 October 2014 (2014-10-06) <br> entire text, all drawings | 1-15 |
| A | US 2009/0171585 A1 (HOSHIZAKI, Takayuki) 02 July 2009 (2009-07-02) <br> entire text, all drawings | 1-15 |
| A | JP 2015-17984 A (ATLANTIC INERTIAL SYSTEMS LIMITED) 29 January 2015 (2015-01-29) <br> entire text, all drawings | 1-15 |
| A | JP 2019-196976 A (SONY CORP) 14 November 2019 (2019-11-14) <br> entire text, all drawings | 1-15 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **05 October 2023** | **24 October 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/029487**

| Patent document cited in search report | | | Publication date (day/month/year) | Patent family member(s) | | | Publication date (day/month/year) |
|---|---|---|---|---|---|---|---|
| JP | 2001-153680 | A | 08 June 2001 | (Family: none) | | | |
| JP | 2012-215547 | A | 08 November 2012 | (Family: none) | | | |
| JP | 2014-190900 | A | 06 October 2014 | (Family: none) | | | |
| US | 2009/0171585 | A1 | 02 July 2009 | (Family: none) | | | |
| JP | 2015-17984 | A | 29 January 2015 | US entire text, all drawings GB DE | 2015/0019129 2516066 102014109592 | A1 A A1 | |
| JP | 2019-196976 | A | 14 November 2019 | US entire text, all drawings WO WO EP CN | 2021/0116242 2019/216132 2019/216133 3792594 112136020 | A1 A1 A1 A1 A | |

Form PCT/ISA/210 (patent family annex) (January 2015)

**REFERENCES CITED IN THE DESCRIPTION**

**Patent documents cited in the description**

- JP 2014141846 A
- JP 2019196976 A